# FASCICULE DE BREVET EUROPEEN

(11) **EP 0 689 142 B1**
(45) Date de publication et mention de la délivrance du brevet: **06.03.2002**
(21) Numéro de dépôt: 95401444.5
(22) Date de dépôt: 20.06.1995
(51) Int. Cl.: G06F 12/02

(54) **Dispositif électronique d'adressage de mémoire, notamment pour une mémoire organisée par bancs**
Elektronische Vorrichtung zur Speicheradressierung, insbesondere für bankorganisierten Speicher
Electronic memory addressing apparatus especially for a bank organized memory

(30) Priorité: 21.06.1994 FR 9407579
(43) Date de publication de la demande: 27.12.1995
(73) Titulaire: FRANCE TELECOM, 75015 Paris (FR)
(72) Inventeur: Quillevere, Claude, F-29470 Plougastel-Daoulas (FR); Dufal, Frédéric, F-38100 Grenoble (FR)
(74) Mandataire: Casalonga, Axel

(56) Documents cités:
- US-A- 3 996 559
- US-A- 4 090 174
- PROCEEDINGS OF THE 1985 INTERNATIONAL CONFERENCE ON PARALLEL PROCESSING, 20 Août 1985 WASHINGTON, IEEE COMP. SOC. PRESS; US, pages 276-283, FRAILONG ET AL. 'XOR-schemes: A flexible data organization in parallel memories'

## Description

L'invention concerne l'adressage de mémoire, notamment mais non exclusivement organisée par bancs.

Elle s'applique en particulier à l'adressage d'une mémoire à partir d'un espace bidimensionnel de points, par exemple les pixels d'une image vidéo, repérés dans ledit espace par des coordonnées selon deux directions, et associés à des données à stocker dans l'espace-mémoire de la mémoire.

Actuellement, les moyens d'adressage d'une mémoire physique, réalisée par exemple sur une carte électronique, sont figés et adaptés pour adresser la mémoire à partir d'un espace bidimensionnel ayant une configuration géométrique prédéterminée, par exemple une matrice carrée de points de taille fixée.

Or, dans de nombreux domaines techniques, et notamment dans celui du traitement d'images vidéo, il s'avère nécessaire de traiter des espaces bidimensionnels ayant des configurations géométriques différentes, par exemple des portions d'image de formes rectangulaires différentes. Il est alors particulièrement intéressant de pouvoir utiliser le même espace-mémoire, c'est-à-dire la même structure physique, aux fins de son adressage par un espace bidimensionnel ayant des configurations géométriques différentes et donc potentiellement une capacité d'adressage supérieure à celle de l'espace-mémoire.

Ceci n'est pas possible avec les moyens d'adressage classiques d'une mémoire.

Ce problème est encore plus difficile à résoudre lorsque la mémoire est organisée par bancs, et en particulier lorsque l'on souhaite lire ou stocker en parallèle plusieurs données, par exemple des lignes, colonnes et diagonales d'une image, stockées dans des bancs différents.

En effet, dans un tel cas, l'adresse d'un point de l'espace bidimensionnel (image) est convertie par les moyens d'adressage de la mémoire en un couple d'adresses contenant l'adresse de l'un des bancs de la mémoire et l'adresse de l'une des cellules-mémoire dudit banc. Cette loi de conversion doit être injective c'est-à-dire qu'à deux adresses d'origine différentes doivent correspondre deux couples différents.

La façon d'organiser la distribution des données dans une mémoire organisée par bancs de façon à pouvoir notamment prévoir de disposer dans des bancs différents les données auxquelles on souhaite accéder simultanément, est une technique particulière d'organisation de mémoire communément appelée par l'homme du métier "skewing" en langue anglaise. Une telle technique est notamment évoquée dans l'article de Shapiro, Theoretical Limitations on the Efficient Use of Parallel Memories, IEEE Transactions on Computers, Vol C-27, n° 5, Mai 1978, pages 421-428, et dans l'article de Wijshoff & Leewen dans The Structure of Periodic Storage Schemes for Parallel Memories, IEEE Transactions on Computers, Vol C-34 No. 6, Juin 1985, pages 501-504, et dans les brevets US-A 4 094 174 et US-A-3 996 559.

Or, cette technique de "skewing" et, par voie de conséquence la structure des moyens d'adressage classiquement utilisés pour mettre en oeuvre une telle technique, repose sur le principe que la forme de l'espace bidimensionnel de points, par exemple une image, est figée au moment de la réalisation physique de la mémoire par "skewing". Il n'est donc pas possible d'utiliser la même structure physique à partir d'un espace bidimensionnel de points pouvant présenter des configurations géométriques différentes. En effet, si une telle tentative était effectuée, c'est-à-dire si l'on modifiait la signification des bits d'adressage délivrés aux moyens d'adressage de la mémoire, on ne serait alors plus certain de conserver l'injectivité de la loi de conversion et il ne serait également pas certain que l'on puisse éviter des conflits d'accès à la mémoire en délivrant des données, qui pour une configuration géométrique fixée, figuraient bien dans des bancs distincts, mais qui par un changement de configuration géométrique de l'image, figurent maintenant dans le même banc.

L'invention vise à apporter une solution à ces problèmes.

Un but de l'invention est de pouvoir adresser un même espace-mémoire d'une mémoire à partir d'un espace bidimensionnel de configurations géométriques différentes, et présentant donc potentiellement une capacité d'adressage supérieure à celle de l'espace-mémoire.

L'invention a également pour but de permettre un paramétrage de la forme de l'espace bidimensionnel de points.

L'invention a également pour but de permettre un tel paramétrage dans le cas d'une mémoire organisée par bancs.

L'un des buts de l'invention est également, avec une même structure physique, de pouvoir configurer l'espace-mémoire de façon différente c'est-à-dire de pouvoir y stocker des données codées sur des nombres différents de bits.

L'invention permet également de partitionner aisément la structure physique en plusieurs blocs mémoire indépendants ce qui permet d'accéder à des motifs de points différents de l'espace bidimensionnel de points.

Telle que revendiquée, l'invention a donc pour objet un dispositif électronique d'adressage de mémoire, pour une mémoire comportant un espace-mémoire utile de M bits configurable en 2ⁿ cellules-mémoire de D bits, n'étant un métier positif (dans un cas particulier, M est égal à 2^{m} et D est égal à 2^{d}, d étant un entier positif ou nul, la somme n+d étant égale à m), chaque cellule-mémoire étant adressable par un mot d'adresse-cellule de n bits; le dispositif comprend des moyens d'entrée comportant un premier port d'entrée de q₁ entrées et deuxième port d'entrée de q₂ entrées, la somme q₁ + q₂ étant supérieure à n, pour recevoir des paires de premiers mots de k bits et de deuxièmes mots de n - k bits; chaque ensemble des n bits représente une information d'adresse d'un point d'un espace bidimensionnel de points associés à des données codées sur D bits, les bits respectifs des premier et deuxième mots représentant deux coordonnées du point dans ledit espace; le dispositif comprend également une entrée de configuration pour recevoir une valeur de k, choisie positive ou nulle et inférieure ou égale à n, et représentative d'une configuration géométrique choisie pour l'espace bidimensionnel; il est également prévu des moyens d'adressage, commandables à partir de la valeur de k, et comportant des moyens de sélection pour sélectionner les entrées du premier port recevant les k bits de chaque premier mot et les entrées du deuxième port recevant les n - k bits de chaque deuxième mot, ainsi que des moyens de génération d'adresse pour former, à partir des bits sélectionnés, un mot d'adresse-cellule de n bits permettant d'adresser la cellule-mémoire dans laquelle sera stockée la donnée associée audit point; on peut ainsi adresser le même espace-mémoire utile à partir d'un espace bidimensionnel de configurations géométriques différentes.

En d'autres termes, lorsque l'adressage de l'espace-mémoire s'effectue sur n bits l'invention permet de pouvoir répartir librement ces n bits d'adressage entre les deux coordonnées de chaque point. On peut ainsi adresser l'espace-mémoire par tous les points situés sur l'axe des abscisses (par exemple) de l'image ce qui correspond à des adresses de points dont les abscisses sont codées sur n bits et les ordonnées sur 0 bit, ou bien tous les points de l'axe des ordonnées (ordonnées des points codés sur n bits et abscisses sur 0 bit), ou bien des points contenus dans un rectangle dont tous les points ont une adresse selon l'axe des ordonnées, codées sur un nombre de bits inférieur ou égal à k et une adresse, selon l'axe des abscisses, codées sur un nombre de bits inférieur ou égal à n - k.

Le dispositif selon l'invention trouve une application particulièrement avantageuse dans le cas d'une mémoire organisée par bancs dont l'espace-mémoire utile comporte par exemple au moins 2^{b} bancs de M bits (M = 2^{m} avec m = n + d, dans un cas particulier), avec b supérieur ou égal à 1. Selon un mode de réalisation de l'invention, la somme des entrées des deux ports est choisie supérieure à la somme s égale à n + b tandis que k est choisi supérieur ou égal à b et inférieur ou égal à s - b. Les moyens d'adressage sont alors aptes à convertir, selon une loi de conversion injective prédéterminée, chaque information d'adresse d'un point en un mot d'adresse-mémoire comportant un mot d'adresse-cellule et un mot d'adresse-banc représentant, dans l'espace-mémoire, l'adresse du banc contenant ladite cellule. Les moyens d'adressage comprennent à cet effet des moyens de sélection aptes, en présence de mots d'informations d'adresse de s₁ bits, avec s₁ = s, à sélectionner les entrées du premier port recevant les k bits de chaque premier mot et les s₁ - k bits de chaque deuxième mot pour former un mot intermédiaire de s₁ bits, ainsi que des moyens de génération aptes à former, à partir des s₁ bits du mot intermédiaire, le mot d'adresse-cellule de n₁ bits, avec n₁ = n, et le mot d'adresse-banc d'au moins b bits.

Ainsi par exemple, dans le cas où la mémoire comporte 16 bancs avec un adressage sur 15 bits (n = 11 et b = 4) le nombre total des entrées des deux ports est au moins égal à 16 tandis que k est choisi supérieur ou égal à 4 et inférieur ou égal à 11. Les mots d'informations d'adresse comportent alors 15 bits, de même que le mot intermédiaire, tandis que chaque mot d'adresse-cellule comporte 11 bits et le mot d'adresse-banc 4 bits.

Si m, qui est égal à n + d, est choisi égal à 15, il est possible de stocker dans chaque cellule-mémoire de l'espace-mémoire des mots de données de 16 bits (2⁴ bits).

Néanmoins, il peut s'avérer intéressant de configurer l'espace-mémoire de façon à stocker non pas 2ⁿ mots de 16 bits mais 2ⁿ⁻¹ mots de 32 bits. Dans ce cas, les mots d'informations d'adresse des points délivrés au dispositif selon l'invention, comporteront des bits utiles d'adressage en un nombre s₁ inférieur à s. Et c'est sur ce nombre s₁ de bits qui vont opérer avantageusement les moyens de sélection pour former le mot intermédiaire à partir duquel seront formés les mots d'adresse-cellule et les mots d'adresse correspondants.

Plus généralement, selon un mode de réalisation de l'invention, les moyens de sélection sont aptes, en présence de mots d'informations d'adresse de s₁ bits, avec s₁ = s - dₒ bits, affectées à des points dont les données correspondantes sont codées sur 2^{d + d}o bits, à sélectionner les entrées du premier port recevant les k - dₒ premiers bits de chaque premier mot et les s₁ - k + do premiers bits de chaque deuxième mot pour former le mot intermédiaire de s₁ bits, les moyens de génération formant à partir des s₁ bits du mot intermédiaire, le mot d'adresse cellule de n₁ bits, avec n₁ = n - dₒ, et le mot d'adresse-banc d'au moins b bits.

En fait, l'invention permet également de combiner les deux possibilités évoquées ci-avant. A cet effet, il est prévu de générer un mot intermédiaire de s bits et de l'utiliser totalement dans le premier cas évoqué ci-dessus (adressage sur s bits) ou bien partiellement (adressage sur s₁ bits).

Selon un mode de réalisation de l'invention, chaque port d'entrée comporte s₁ - b entrées, et les moyens de sélection sélectionnent alors au moins les b premiers bits de chacun des premier et deuxième mots quelle que soit la valeur de k, pour former le mot intermédiaire.

Les moyens de génération génèrent avantageusement le mot d'adresse-cellule à partir des b premiers bits de l'un des premier et deuxième mots, et des n₁ - b autres bits sélectionnés par les moyens de sélection et différents des b premiers bits de l'autre des premier et deuxième mots.

Les moyens de génération peuvent déterminer le mot d'adresse-banc à partir d'une relation linéaire modulo p entre les deux coordonnées du point, où p désigne le nombre de bancs de la mémoire. Ce nombre de bancs peut être égal à 2^{b}. Les moyens de génération déterminent alors le mot d'adresse-banc de b bits à partir des premiers bits de chacun des premier et deuxième mots.

Le nombre de mots peut être aussi égal à un nombre premier supérieur à 2^{b}. Par exemple, lorsque b est égal à 4, p est avantageusement choisi égal à 17. Dans ce cas, les mots d'adresse-banc comporteraient des mots de 5 bits.

Lorsque le nombre de bancs est égal à 2^{b}, les moyens de sélection sont en outre avantageusement aptes à substituer au moins le plus fort bit d'adressage de l'un des premier et deuxième mots par le b^{ème} bit de l'autre des premier et deuxième mots pour former le mot intermédiaire de s₁ bits, et les moyens de génération forcent alors le bit d'adressage de poids le plus élevé du mot d'adresse-banc obtenu, à une valeur prédéterminée, ce qui permet de partitionner l'espace-mémoire en plusieurs blocs mémoire indépendants, ici par exemple en deux blocs mémoire de 2^{b-1} bancs chacun, tout en conservant, à l'intérieur de chacun des blocs mémoire, l'injectivité de loi de conversion prédéterminée.

Dans le cas où l'on souhaite accéder simultanément à des données stockées dans des bancs distincts, les moyens d'entrée du dispositif comportent avantageusement 2^{b} paires de ports d'entrées destinés à recevoir respectivement et simultanément 2^{b} informations d'adresse choisies et correspondant à 2^{b} mots d'adresse-banc distincts compte tenu de la loi de conversion injective prédéterminée. Le dispositif selon l'invention peut alors par sa structure matérielle, convertir chacune des 2^{b} informations d'adresse délivrées en 2^{b} mots d'adresse-banc distincts et en 2^{b} mots d'adresse-cellulle permettant d'identifier la localisation des cellules-mémoire correspondantes.

D'autres avantages et caractéristiques de l'invention apparaîtront à l'examen de la description détaillée de plusieurs modes de réalisation nullement limitatifs et les dessins annexés sur lesquels :
- la figure 1 est un synoptique schématique d'un dispositif selon l'invention connecté à une mémoire adressable à partir d'un espace bidimensionnel de points,
- la figure 2 est une représentation schématique plus détaillée du dispositif de la figure 1,
- la figure 3 est une représentation synoptique encore plus détaillée du dispositif de la figure 1,
- la figure 4 est une représentation plus détaillée d'une partie de la figure 3,
- la figure 5 illustre de façon plus détaillée une autre partie du dispositif de la figure 2,
- les figures 6 à 8 illustrent trois autres modes de réalisation du dispositif selon l'invention, et
- la figure 9 est une représentation synoptique d'un dispositif selon l'invention applicable à l'accès simultané aux différents bancs de la mémoire.

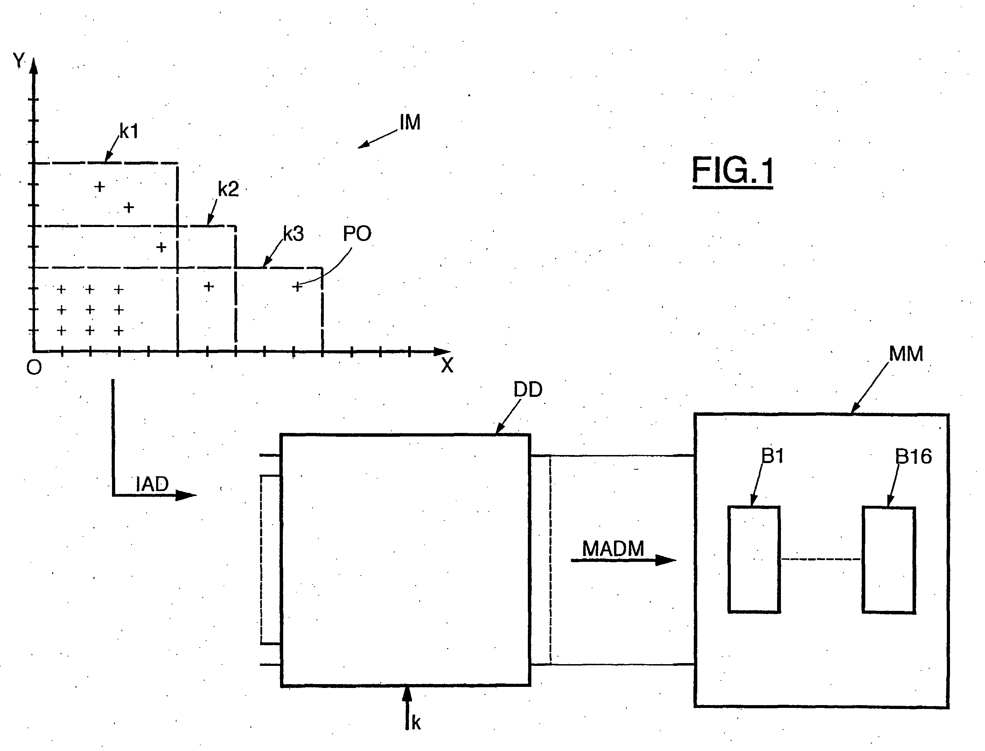

Bien que l'invention n'y soit pas limitée, on va maintenant décrire différents modes de réalisation d'un dispositif selon l'invention applicables à une mémoire MM telle qu'illustrée sur la figure 1, organisée par bancs. On rappelle que les bancs d'une mémoire sont des blocs de mémoire physique indépendants.

Sur la figure 1, l'espace-mémoire de la mémoire MM comporte 2^{b} bancs B1 - B16, b étant égal à 4. Chaque banc comporte un espace utile de mémoire de 2^{m} bits configurable en 2ⁿ cellules-mémoire de 2^{d} bits; n et d sont des entiers positifs ou nuls de somme égale à m. Chaque cellule mémoire est adressable par un mot d'adresse-cellule de n bits. Dans le cas particulier qui sera décrit ci-après, chaque banc pourra être configuré en 2ⁿ cellule-mémoire de 16 bits ou bien en 2ⁿ-1 cellules-mémoire de 32 bits. Dans le premier cas, la mémoire permettra le stockage de données codées sur 16 bits, et sur 32 bits dans le deuxième cas.

L'adressage de la mémoire MM s'effectue par l'intermédiaire d'un mot d'adresse mémoire MADM de s bits, pouvant être égal à n + b dans le cas où les données à stocker sont codées sur 16 bits, ou bien égal à n + b - 1 dans le cas où les données sont codées sur 32 bits.

En fait, comme on le verra plus en détail ci-après, le mot d'adresse-mémoire MADM se décompose en un mot d'adresse-banc représentant, dans l'espace-mémoire, l'adresse d'un banc et, d'un mot d'adresse-cellule représentant l'adresse d'une cellule-mémoire dans ledit banc.

Ce mot d'adresse-mémoire MADM est délivré par le dispositif DD selon l'invention à partir d'un mot d'information d'adresse IAD reçu en entrée et permettant de repérer un point PO d'un espace bidimensionnel de points IM, tel qu'une image vidéo, une portion d'image vidéo ou tout autre type de données que l'utilisateur de la mémoire aura pu structurer selon deux dimensions.

Une information d'adresse est un mot de s bits dont k bits représente l'une des coordonnées du point dans l'image, par exemple l'ordonnée, tandis que les s - k autres bits représentent une autre coordonnée de ce point dans l'espace bidimensionnel par exemple l'abscisse. Selon les différentes valeurs de k (k1, k2, k3), on voit donc que l'on définit des configurations géométriques différentes pour l'image.

Les dispositifs d'adressage classiques de mémoire bidimensionnelle, sont figés et adaptés à une configuration géométrique prédéterminée, par exemple la configuration k2. Il n'est donc pas possible alors d'adresser la mémoire avec des points situés en dehors du domaine défini par k2.

L'invention au contraire le permet et c'est en ce sens que l'on parle de capacité d'adressage de l'espace bidimensionnel de points, supérieure à celle de l'espace-mémoire utile, étant entendu bien sûr que la capacité d'adressage maximale de chaque domaine défini par la valeur k est identique et au plus égale à celle de l'espace-mémoire de la mémoire.

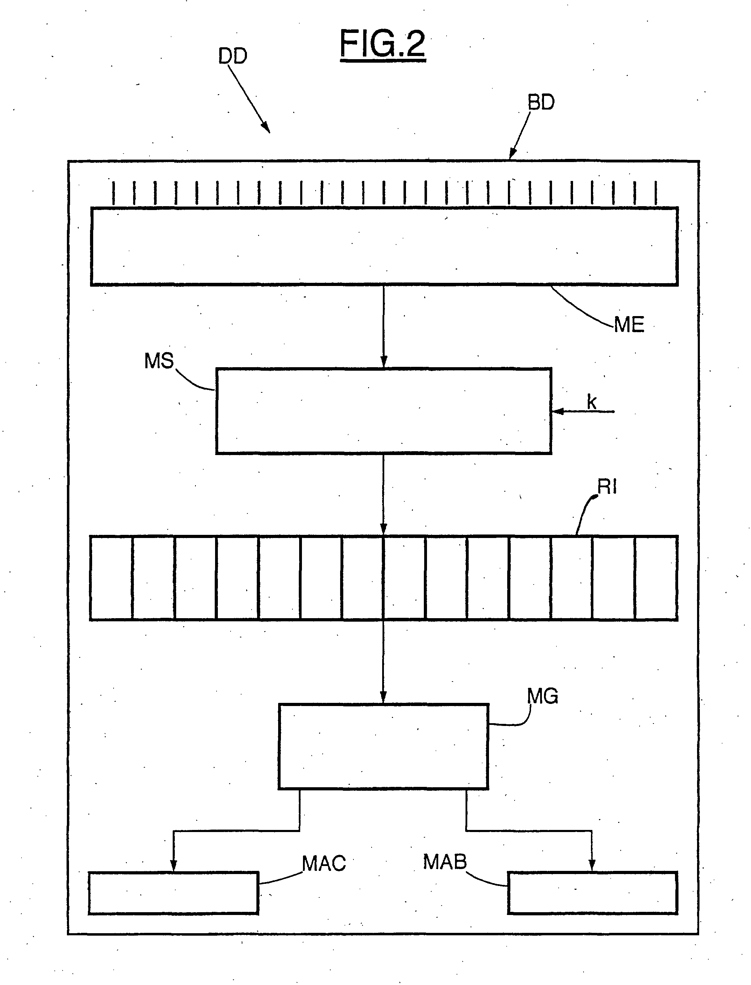

Tel qu'illustré sur la figure 2, le dispositif DD comprend au moins un bloc BD comportant des moyens d'entrée ME ayant un nombre d'entrées supérieur au nombre de bits de l'information d'adresse, c'est-à-dire supérieur à s. Les moyens d'entrée reçoivent donc des premiers mots de k bits et les deuxièmes mots de s - k bits, qui forment ensemble l'information d'adresse des différents points. Le dispositif possède également une entrée de configuration pour recevoir une valeur de k choisie, dans le cas général, positive ou ou nulle et inférieure ou égal à s. Cette valeur de k est donc représentative de la configuration géométrique choisie pour l'espace bidimensionnel.

Les moyens d'adressage du bloc BD, sont commandés par la valeur de k, et comportent des moyens de sélection pour sélectionner les entrées des moyens d'entrée recevant les k bits de chaque premier mot et les entrées recevant les s- k bits de chaque deuxième mot, et former ainsi dans un registre RI un mot intermédiaire de s bits. Des moyens de génération MG forment alors à partir des s bits du mot intermédiaire un mot d'adresse-banc MAB de b bits représentant l'adresse du banc dans l'espace-mémoire de la mémoire ainsi qu'un mot d'adresse-cellule MAC de n bits permettant d'adresser la cellule mémoire dans laquelle sera stockée la donnée associée au point considéré.

Bien entendu, dans le cas où la mémoire ne serait pas organisée par bancs, le mot intermédiaire de s bits formerait à lui seul le mot d'adresse-cellule permettant d'adresser la cellule-mémoire dans laquelle sera stockée la donnée associée au point considéré. En outre l'utilisation d'un registre RI n'est pas indispensable, ce dernier pouvant être tout simplement un bus interne.

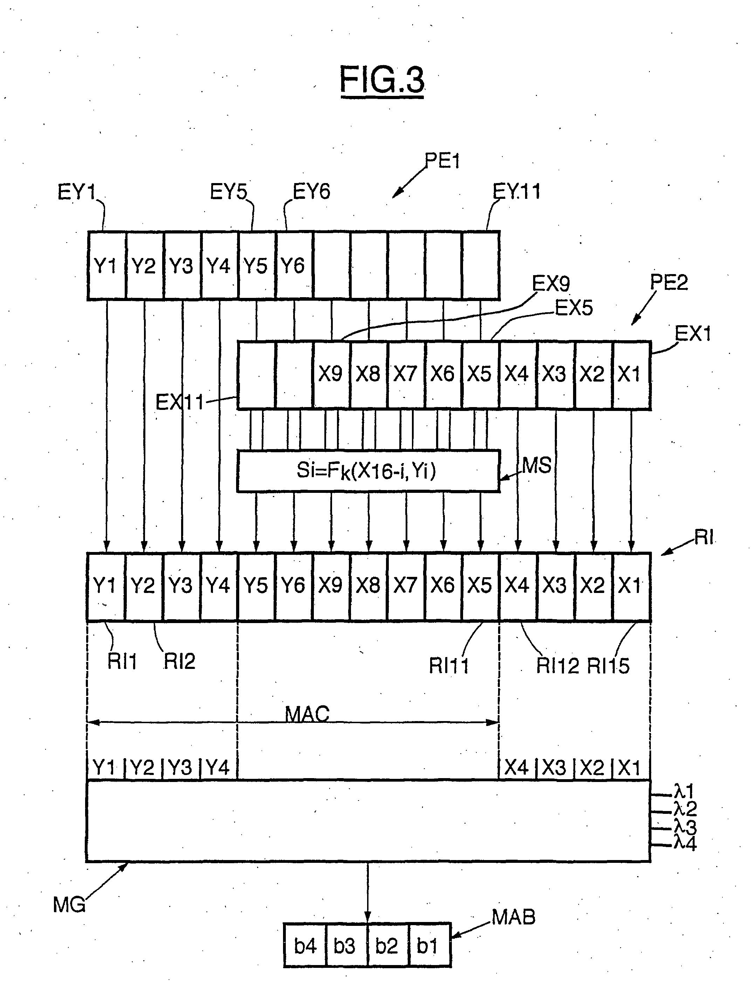

On suppose maintenant, dans le mode de réalisation illustré sur la figure 3, que le mot représentatif de chaque information d'adresse IAD reçue en entrée du dispositif est un mot de s = 15 bits. Chacun des 16 bancs de la mémoire est adressable par un mot d'adresse-banc MAB de 4 bits et chaque banc a une capacité utile de 2^{m} bits configurable en 2ⁿ cellule-mémoire adressables par des mots d'adresse-cellule MAC de n bits avec n = 11, permettant de stocker des données codées sur 16 bits (d = 4).

k est alors choisi supérieur ou égal à b et inférieur ou égal à s - b c'est-à-dire en l'espèce supérieur ou égal à 4 et inférieur ou égal à 11. Les moyens d'entrée comportent deux ports d'entrées PE1, PE2 ayant chacun s - b entrées; c'est-à-dire 11 entrées, EY1-EY11 et EX1-EX11.

Bien entendu, d'une façon générale toutes les entrées de chaque port sont câblées de façon à être capables de recevoir les bits des premier et deuxième mots en un nombre correspondant à la configuration géométrique choisie pour l'espace bidimensionnel.

Les entrées EY1 à EYk du premier port d'entrée PE1 reçoivent les k bits du premier mot formant l'information d'adresse IAD, ces k bits étant ordonnés de telle sorte que le bit de poids faible Y1 soit reçu sur l'entrée EY1 et le bit de poids fort Yk soit reçu sur l'entrée EYk.

De même, les s - k bits du deuxième mot sont respectivement reçus sur les entrées EX1 à EXs-k.

Les moyens de sélection MS sélectionnent les entrées du premier port PE1 recevant les k bits de chaque mot et les entrées du deuxième port PE2 recevant les s-k bits du deuxième mot. Puisque k est choisi supérieur ou égal à b et inférieur ou égal à s - b, les b premiers bits Y1-Y4 de chaque premier mot sont directement stockés dans le registre intermédiaire RI destiné à recevoir le mot intermédiaire de s bits, de même que les b premiers bits X1-X4 de chaque deuxième mot.

Dans le cas présent, les moyens de sélection se composent donc essentiellement d'un bloc MS relié aux entrées EX5-EX11 du deuxième port, et aux entrées EY5-EY11 du premier port, et apte à effectuer sur les bits reçus sur ces entrées la fonction Fk(X16-i, Yi) pour délivrer dans le registre intermédiaire, 7 bits S5 - S11. Selon cette fonction, le bit Si vaut Yi si i est inférieur ou égal à k, et il vaut X16 - i si i est supérieur à k.

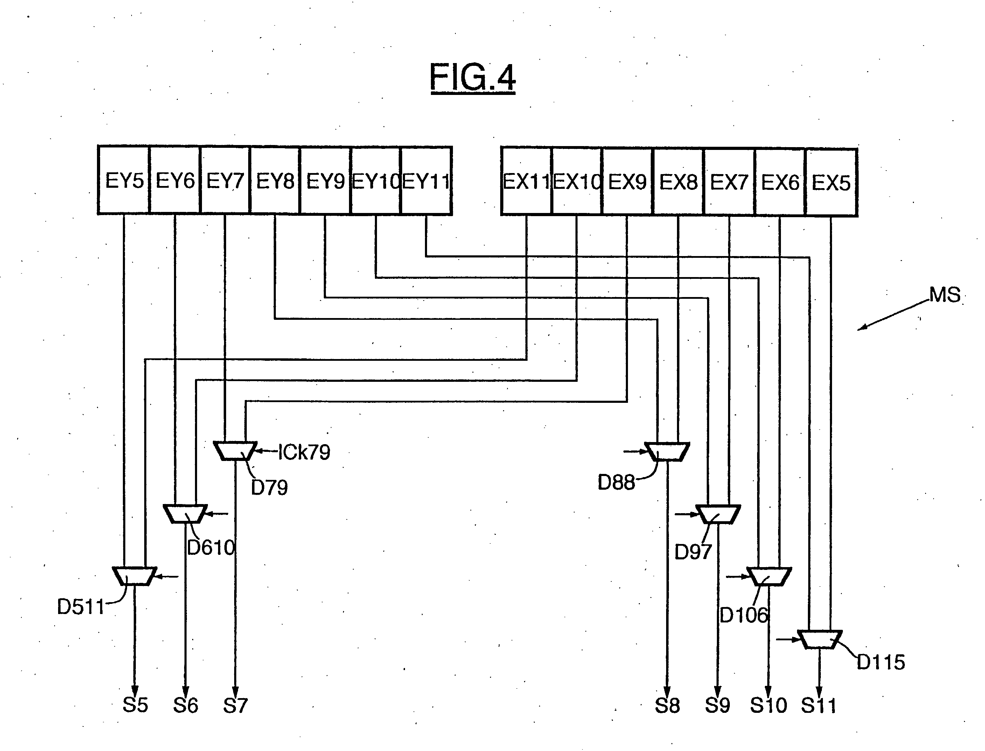

Bien que les moyens de sélection MS puissent être réalisés de différentes façons, il a été jugé préférable, pour des raisons de simplicité de réalisation, d'adopter le mode de réalisation illustré sur la figure 4. Les moyens MS comportent ici une pluralité de duplexeurs.

L'une des entrées de chaque duplexeur est relié à l'une des entrées du premier port d'entrée tandis que l'autre entrée dudit duplexeur est reliée à une entrée du deuxième port d'entrée. Ainsi, le duplexeur D511 est relié aux entrées EY5 et EX11 pour délivrer en sortie le bit S5, le duplexeur D610 est relié aux sorties EY6 et EX10 pour délivrer le bit S6, le duplexeur D79 est relié aux entrées EY7 et EX9 pour délivrer le bit S7, le duplexeur D88 est relié aux entrées EY8 et EX8 pour délivrer le bit S8, le duplexeur D97 aux entrées EY9 et EX7 pour délivrer le bit S9, le duplexeur D106 aux entrées EY10 et EX6 pour délivrer le bit S10 et le duplexeur D115 aux entrées EY11 et EX5 pour délivrer le bit S11.

D'une façon générale, les entrées de chaque port sont ordonnées de façon à recevoir respectivement les bits du mot correspondant rangés depuis le bit de poids faible jusqu'au bit de poids fort. Ainsi, l'entrée EY5 de rang 5 est destinée à recevoir éventuellement le bit Y5 de rang 5 du premier mot, tandis que l'entrée EY11 de rang 11 est destinée à recevoir éventuellement le onzième bit du premier mot. De même, l'entrée EX5 du deuxième port, de rang 5, est destinée à recevoir éventuellement le cinquième bit du deuxième mot et l'entrée EX11 éventuellement le onzième bit du deuxième mot. Aussi, d'une façon générale, la somme des rangs de toutes les paires d'entrées des deux ports auxquelles sont connectés les duplexeurs est constante et égale ici à 16.

Chaque duplexeur Duv, relié aux entrées EYu et EXv, est commandé par une information de commande ICkuv, dépendant de la valeur de k, de façon à relier à la case correspondante du registre intermédiaire RI, soit l'entrée EYu soit l'entrée EXv.

Les moyens d'adressage comportent alors des moyens de commande aptes à délivrer à partir de la valeur de k chaque information de commande numérique ICkuv. Plus précisémment, selon un exemple de réalisation si u=i et υ = 16-i, l'information de commande ICkuv est un bit de commande valant 1 si i ≤ k (entrée EYu relié à la case du registre) et 0 si i > k (entrée EX υ reliée à la case du registre); ce bit de commande peut être obtenu à partir d'un codage de k en binaire, ou bien par un codage de k en unaire sous la forme de 16-k zéros et de k uns.

Le fait, d'une façon générale, de "retourner" les bits de l'un des mots, en l'espèce le deuxième mot, par rapport à l'autre mot, comme on peut le voir sur la figure 3, c'est-à-dire le fait de coupler par des duplexeurs, des entrées de ports dont la somme des rangs et constante, permet de réaliser de façon très simple l'adressage flexible selon l'invention et de n'utiliser essentiellement que des duplexeurs.

On revient maintenant à la figure 3 sur laquelle on a supposé, à titre d'exemple, que k était égal à 6. En d'autres termes, les 6 bits Yi du premier mot sont les six bits Y1 à Y6 et sont respectivement délivrés aux entrées EY1-EY6, tandis que les 9 bits Xi du deuxième mot, à savoir les bits X1-X9 sont respectivement délivrés aux entrées EX1-EX9 du deuxième port. On remarque donc que les EY7-EY11 du premier port PE1 et les entrées EX10 et EX11 du deuxième port ne reçoivent aucun bit. Les moyens de sélection MS sélectionnent donc les entrées EY5, EY6, EX9, EX8, EX7, EX6 et EX5 pour délivrer respectivement dans le registre intermédiaire RI les bits S5-S11 valant respectivement Y5, Y6, X9, X8, X7, X6, X5.

D'une façon générale, les moyens de génération déterminent le mot d'adresse cellule MAC de n (= 11) bits à partir des b premiers bits de l'un des premier et deuxième mots et des n - b autres bits sélectionnés par les moyens de sélection et différents des premiers bits de l'autre des premier et deuxième mots. Concrètement, dans le cas présent, le mot d'adresse cellule MAC est obtenu à partir des b premiers bits Y1-Y4 de chaque premier mot et des sept autres bits sélectionnés par les moyens de sélection à l'exception des b premiers bits X1-X4 du deuxième mot, à savoir les bits Y5, Y6, X9-X5.

En fait, la structure des moyens de génération du mot d'adresse-cellule se résume ici à une simple connexion de la partie correspondante du registre intermédiaire RI vers le port d'adressage de la mémoire.

Pour obtenir les b bits du mot d'adresse-banc MAB, il convient de choisir une fonction préservant l'injectivité de la loi de conversion d'adresse. On pourra par exemple opter pour une relation linéaire modulo 2^{b} (c'est-à-dire une relation linéaire périodique de période 2^{b}) entre les deux coordonnées du point considéré. Concrètement, le mot d'adresse MAB est ici de la forme a₁X + λY [16] avec a₁ impair, la notation [] signifiant "modulo". Dans le cas présent, si a₁ est pris égal à 1, un bit bi du mot. d'adresse-banc est calculé uniquement à partir de Xi, Yi et λi avec 1 ≤ i ≤ 4.

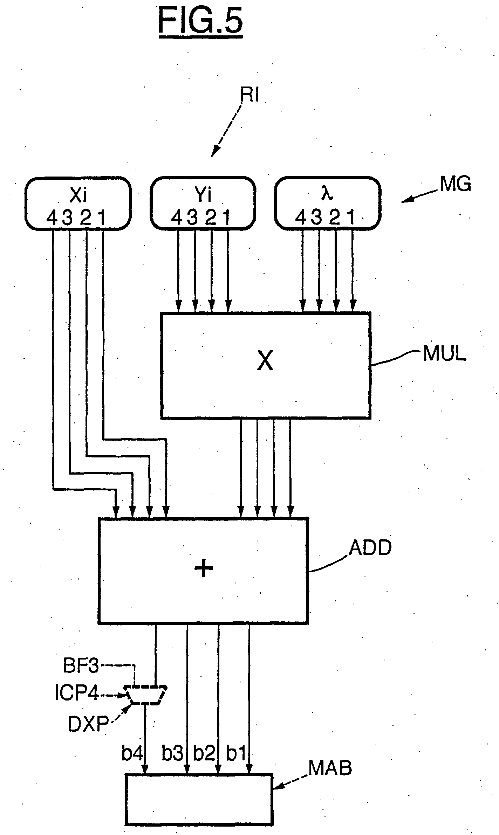

Tel qu'illustré sur la figure 5, les moyens de génération MG comportent alors un multiplieur MUL recevant en entrée les b (quatre) premiers bits Yi du premier mot ainsi que les quatre bits du paramètre λ. La sortie du multiplieur MUL est reliée à l'une des entrées d'un additionneur ADD recevant sur son autre entrée les b premiers bits Xi du deuxième mot. La sortie de l'additionneur fournit les quatre bits b1 - b4 du mot d'adresse-banc MAB considéré. Dans certains cas détaillés ci-après, il peut s'avérer intéressant de forcer le bit de poids fort du mot d'adresse-banc MAB à une valeur prédéterminée BF3. Ceci s'effectue à l'aide d'un duplexeur DXP commandé par une information de commande ICP.

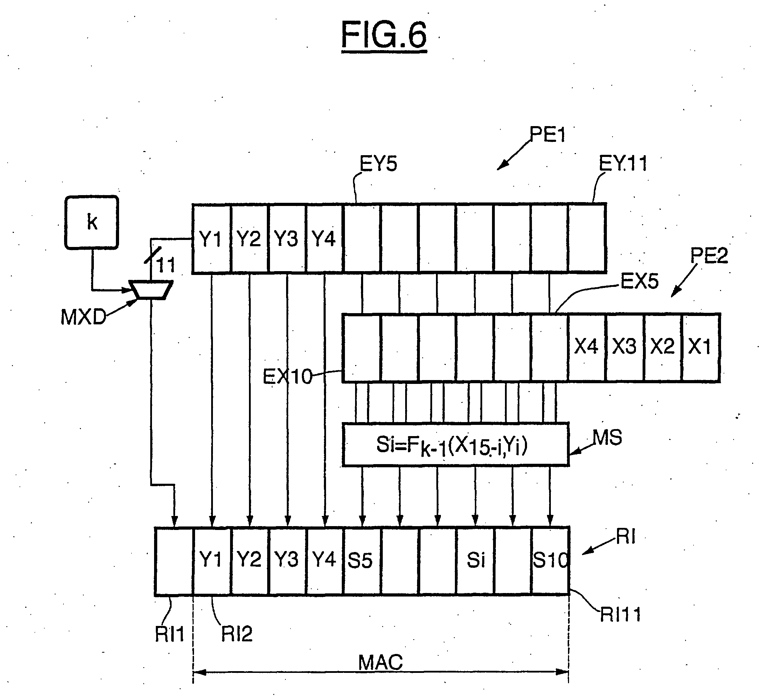

La figure 6 illustre un mode de réalisation de l'invention permettant de s'adapter également à une mémoire dont chaque cellule mémoire est adaptée maintenant pour stocker des données codées sur 32 bits et est par conséquent adressable par un mot d'adresse-cellule de n - 1 bits (sur cette figure on suppose que k sera choisi supérieur ou égal à 5).

A des fins de simplification, on n'a représenté sur la figure 6 que la partie du registre intermédiaire RI destinée à contenir le mot d'adresse-cellule MAC. Les moyens de génération du mot d'adresse-banc ne sont pas représentés et déterminent de la même façon que celle expliquée en référence à la figure 5, le mot d'adresse-banc correspondant.

En théorie, dans le cas où l'on ne souhaite pas modifier la configuration de la mémoire d'une application à l'autre, et puisque le mot d'information d'adresse IAD correspondant à un point de l'image est maintenant codé sur s₁ = s-1 bits, les entrées EX11 et EY11 des ports d'entrées PE2 et PE1 sont inutiles, ainsi que le multiplexeur MXD. Les moyens de sélection sélectionnent alors de toute façon les b premiers bits Y1-Y4 du premier mot et six autres bits S5-S10 déterminés par la relation Fₖ₋₁(X15-i, Yi). A cet effet, les duplexeurs réalisant cette fonction sont reliés aux entrées EY5-EY10 et EX5-EX10.

Les mots d'adresse-cellule MAC comportent donc les bits Y1-Y4 et S5 - S10. Néanmoins, le mode de réalisation de la figure 6, dans sa structure complète, permet de s'adapter à un changement éventuel de configuration de l'espace-mémoire MM. En effet, il est prévu un multiplexeur MXD connecté aux onze entrées du premier port d'entrée et commandé par la valeur de k pour délivrer dans la première case RI1 du registre RI le plus haut bit d'adressage Yk du premier mot. Cette première case RI1 correspond alors à une position prédéterminée du mot d'adresse-cellule MAC, à savoir ici le bit de poids le plus fort.

Dans le cas où la configuration de la mémoire prévoit le stockage de données sur 32 bits, le port d'adressage de la mémoire utilisera un mot d'adressage MAC de 10 bits en ignorant le bit de poids le plus fort du mot intermédiaire. Par contre, dans le cas où la mémoire est configurée pour stocker des données de 16 bits, le stockage du plus haut bit d'adressage Yk du premier mot permet de retrouver un mot d'adresse-cellule MAC de 11 bits.

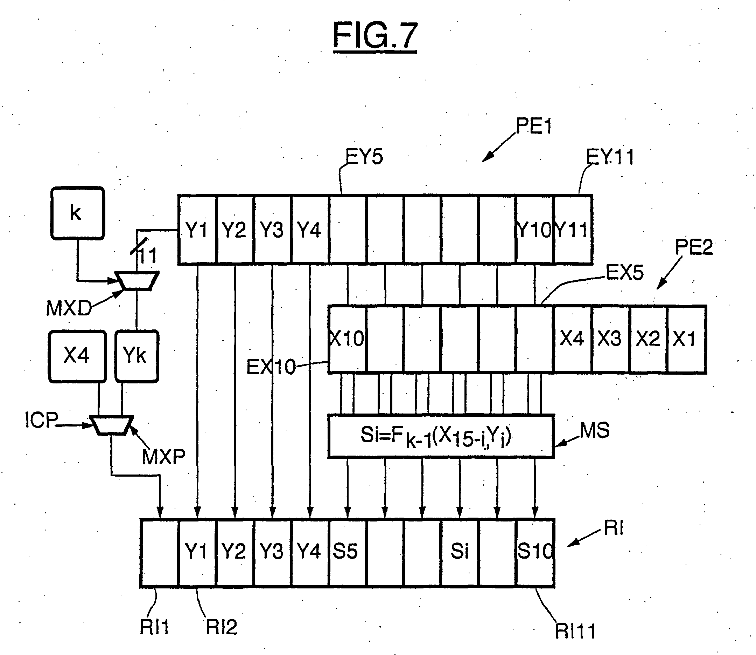

Il peut s'avérer également intéressant dans certaines applications de partitionner l'espace-mémoire en deux blocs-mémoire indépendant ayant chacun 2^{b-1} bancs, c'est-à-dire en l'espèce 8 bancs. Le mode de réalisation illustré sur la figure 7 offre une telle possibilité ( en combinaison avec le duplexeur DXP (figure 5)).

On suppose ici que l'adressage s'effectue sur s bits (15 bits). Ce mode de réalisation diffère de celui illustré sur la figure 6 par le fait qu'il est prévu un duplexeur MXP commandé par une information de commande ICP recevant d'une part en entrée le plus haut bit d'adressage Yk du premier mot et d'autre part le b^{ème} bit X4 du deuxième mot. Dans le cas où l'on souhaite partitionner la mémoire, les moyens de sélection substituent le plus haut bit d'adressage Yk du premier mot (étant entendu que l'on aurait pu aussi prévoir de substituer le plus haut bit d'adressage Xs-k du deuxième mot) par le bit X4. Si on ne souhaite pas partitionner la mémoire, le bit Yk est alors stocké dans le registre intermédiaire et l'on se retrouve dans une situation analogue à celle illustrée sur la figure 3, ou sur la figure 6 avec un adressage sur s bits.

En outre, dans le cas d'un partitionnement de la mémoire, le bit de poids fort b4 du mot d'adresse-banc est remplacé par un bit de valeur prédéterminée BF3.

La raison pour laquelle le bit X4 a été substitué au bit Yk dans le mot d'adresse-cellule MAC est le maintien de l'injectivité de la loi de conversion (bien que le bit b4 du mot d'adresse-banc ait été "écrasé" par le bit BF3). Cette injectivité est retrouvée car le "bit écrasé" dans MAB se retrouve désormais dans MAC.

Bien entendu, dans le cas où l'on souhaite partitionner la mémoire en plus de deux blocs indépendants, il convient de substituer les plus haut bit d'adressages du premier ou du deuxième mot par autant de bits choisis parmi les b premiers bits du deuxième ou du premier mot, respectivement.

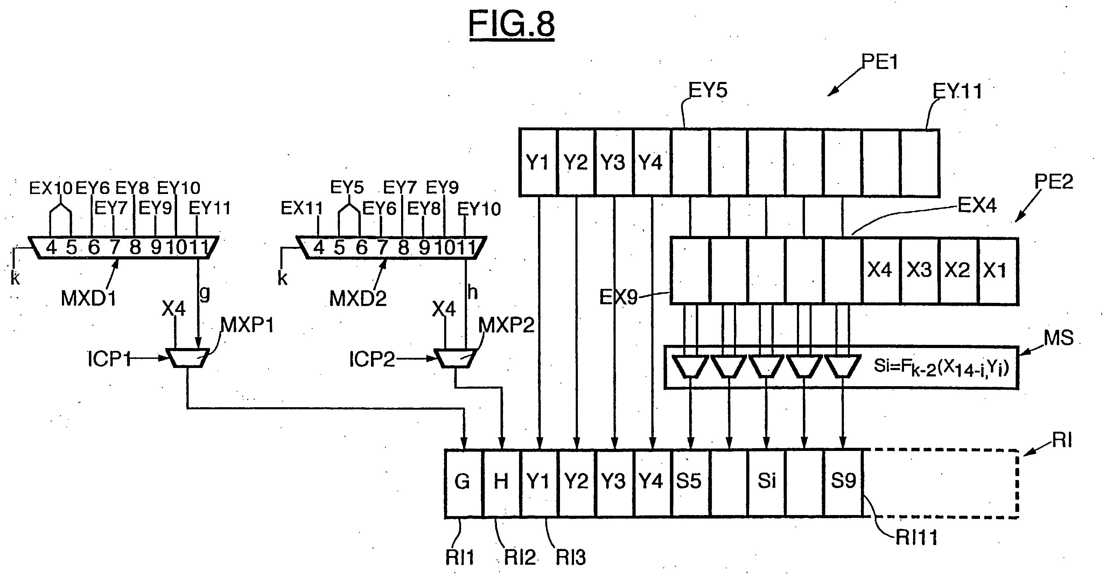

Le mode de réalisation illustré sur la figure 8 permet d'adresser la mémoire, au choix avec des mots de données de 16 bits sans partition, ou avec des mots de 16 bits avec partition, ou avec des mots de données de 32 bits sans partition, ou avec des mots de 32 bits avec partition, tout en offrant la possibilité, en paramètrant la valeur de k, de modifier la configuration géométrique de l'image.

Les deux ports d'entrées comportent s-b entrées (15-4=11 entrées). Les duplexeurs MS commandés par la valeur de k déterminent les bits Si du mot intermédiaire selon la relation Fₖ₋₂ (X14-i, Yi) (c'est-à-dire Si = Yi si i est inférieur ou égal à k - 2 et, X14-i sinon, avec k variant de 4 à 11 et i de 5 à 8). Ils sont respectivement reliés aux entrées du premier port de de rangs b + 1 à s - b - 2 (entrées EY5-EY9) et aux entrées du deuxième port PE2 de rangs s - b - 2 à b + 1 (EX9 à EX5). Les moyens de sélection comportent par exemple un multiplexeur MXD1 commandé par la valeur de k, connecté aux entrées EX10 et EY6 à EY11 et un autre multiplexeur MXD2, également commandé par la valeur de k, relié aux entrées EX11 et EY5 à EY10.

Un autre duplexeur MXP1 reçoit en entrée le b^{ème} bit X4 du deuxième mot ainsi que le bit g délivré par le multiplexeur MXD1 tandis qu'un autre duplexeur MXP2 reçoit également en entrée le b^{ème} bit X4 du deuxième mot et le bit h délivré par le multiplexeur MXP2.

La sortie du multiplexeur MXP1 est reliée à la première case RI1 du registre RI correspondant au bit de poids le plus fort pour le mot d'adresse-cellule MAC de n(=11) bits. La sortie du duplexeur MXP2 est reliée à la case suivante RI2 du registre intermédiaire.

Dans le cas où l'on ne souhaite pas effectuer de partition de la mémoire, les bits G et H prennent respectivement les valeurs g et h en fonction de la valeur de k choisie. Si la mémoire est configurée pour stocker des mots de 16 bits le mot d'adresse-cellule MAC comportera les n bits g à S9. Par contre, si la mémoire est configurée pour stocker les données de 32 bits, le bit G de poids le plus fort sera ignoré et le mot d'adresse-cellule comportera n - 1 bit de H à S9.

Dans le cas d'un partitionnement de la mémoire avec des données codées sur 16 bits, l'un des bits G et H sera remplacé par le bit X4. Dans le cas d'un partitionnement avec des mots de données de 32 bits, le bit H prendra la valeur X3 tandis que le bit G sera ignoré dans le mot d'adresse-cellule MAC.

Outre l'entrée de configuration permettant de choisir la valeur de k, le dispositif comprend aussi des entrées de commande de partitionnement de mémoire et de configuration d'espace-mémoire permettant de recevoir, de la part de l'utilisateur notamment, les informations d'état de configuration de mémoire correspondantes. Les moyens de commande sont alors aptes, d'une façon classique aisément exécutable par l'homme du métier, à élaborer les diverses informations de commande ICP, ICP1, ICP2, ICP4 ainsi qu'une information permettant au port d'adressage de la mémoire MM de prendre en compte ou de ne pas prendre en compte le bit de poids fort du mot d'adresse-cellule MAC.

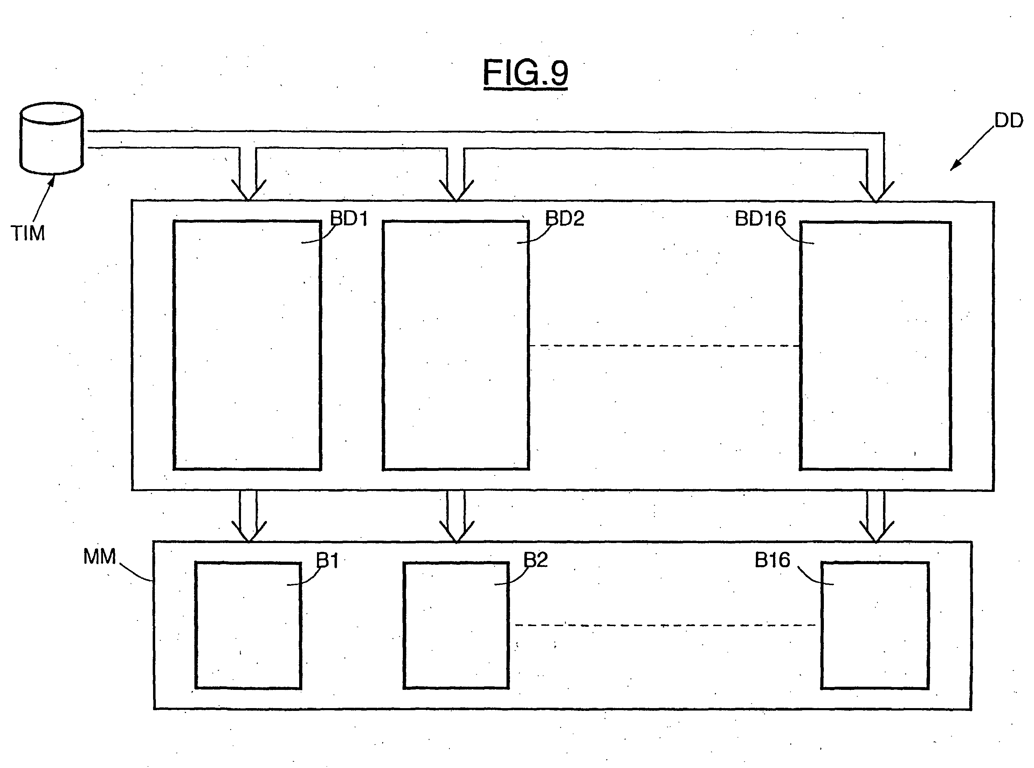

Le dispositif permet, pour chaque valeur de λ, de déterminer une table de conversion (table de "skewing") TIM associant à chaque point de l'image l'adresse MAB de son banc dans la mémoire. Ainsi, dans le cas où l'on souhaite accéder à plusieurs données simultanément, il convient alors que le dispositif DD, tel qu'illustré sur la figure 9, comporte autant de blocs BD1-BD16 que de bancs mémoire B1-B16. L'utilisateur choisira alors, compte tenu de la table de "skewing", d'alimenter chacun des blocs BD1-BD16 avec des points dont l'adresse dans l'image correspond à des adresses de bancs distinctes.

La loi de conversion injective prédéterminée, permet de définir donc un certain nombre de motifs de points accessibles en un seul cycle d'accès mémoire. Cependant, même si l'utilisateur décide de paramétrer le dispositif selon l'invention avec une autre valeur de k tout en conservant la même valeur de λ donc la même loi de conversion des informations d'adresses en mots d'adresse-bancs, il sera assuré de conserver l'injectivité de la loi de conversion de par la détermination selon l'invention des bits de chaque mot d'adresse, et d'éviter des conflits d'accès aux différents bancs de la mémoire.

Dans le cas présent si la mémoire n'est pas partitionnée, l'utilisateur pourra accéder simultanément à des motifs comportant jusqu'à 16 points. Cependant, il peut être souhaitable de partitionner la mémoire en deux blocs indépendants de 8 bancs chacun, de façon à pouvoir accéder simultanément à chacun de ces deux blocs par des motifs de 8 points. Ces motifs de 8 points, certes plus courts, présentent cependant des contraintes de choix moins importantes vis-à-vis des conflits d'accès à des bancs similaires. En d'autres termes, on pourra accéder à chaque cycle dans chaque bloc à un motif comportant jusqu'à 8 points sans se préoccuper du motif accédé dans l'autre bloc puisque la partition garantit qu'il n'y aura jamais de conflit entre les deux blocs.

Dans les modes de réalisation qui viennent d'être décrits, on a supposé que la mémoire était composée d'un nombre p de bancs égal à 2^{b} en utilisant une fonction de "skewing" linéaire du type X + λY modulo p. On pourrait cependant prévoir d'utiliser un nombre premier de bancs voisin de 2^{b}, par exemple 17 dans le cas présent. Le choix de p premier offre des avantages quant aux motifs de points accessibles en un cycle. Par contre, il ne permet pas de partitionner la mémoire MM.

Dans le cas où p = 17, le mot d'adresse banc de 5 bits est calculé également conformément au mode de réalisation de la figure 4 ou de la figure 7. On garde ainsi l'injectivité, même si l'on perd la surjectivité puisque certaines cellules (en fait une sur 17) de chaque bloc mémoire sont inutilisées, ce qui n'est pas préjudiciable.

Dans tous les modes de réalisation qui viennent d'être décrits on a supposé que les deux directions de l'espace étaient respectivement les axes des ordonnées et des abscisses, et que les premier et deuxième mots étaient les adresses des points selon respectivement ces deux axes. Bien entendu, le dispositif selon l'invention est parfaitement "symétrique" en ce sens que les premiers mots pourraient être associés à l'axe des abscisses et les deuxièmes mots à l'axe des ordonnées. En outre, deux autres directions de l'espace bidimensionnel de points peuvent être choisies.

## Revendications

1. Dispositif électronique d'adressage de mémoire, pour une mémoire (MM) comportant un espace-mémoire utile de M bits configurable en 2ⁿ cellules-mémoire de D bits, chaque cellule-mémoire étant adressable par un mot d'adresse-cellule (MAC) de n bits, n étant un entier positif comprenant :
- des moyens d'entrée comportant un premier port d'entrée (PE1) et un deuxième port d'entrée (PE2) dont la somme des entrées est supérieure à n, pour recevoir des paires de premiers mots de k bits et de deuxièmes mots de n- k bits, chaque ensemble de n bits représentant une information d'adresse d'un point (PO) d'un espace bidimensionnel de points associés à des données codées sur D bits, les bits respectifs des premier et deuxième mots représentant deux coordonnées (X, Y) du point dans ledit espace,
- une entrée de configuration pour recevoir une valeur configurable de k, choisie positive ou nulle et inférieure ou égale à n, et représentative d'une configuration géométrique choisie pour l'espace bidimensionnel (IM),
- des moyens d'adressage, commandables à partir de la valeur de k, comportant des moyens de sélection (MS) pour sélectionner les entrées du premier port recevant les k bits de chaque premier mot et les entrées du deuxième port recevant les n - k bits de chaque deuxième mot, et des moyens de génération d'adresse (MG) pour former, à partir des bits sélectionnés, un mot d'adresse-cellule (MAC) de n bits permettant d'adresser la cellule-mémoire dans laquelle sera stockée la donnée associée audit point,
de façon à pouvoir adresser le même espace-mémoire utile à partir d'un espace bidimensionnel de configurations géométriques différentes, en particulier une image vidéo.

2. Dispositif selon la revendication 1, **caractérisé par le fait que** M est égal à 2^{m} et D est égal à 2^{d}, d étant un entier positif ou nul, la somme n+d étant égale à m.

3. Dispositif selon l'une des revendications précédentes, **caractérisé par le fait que** les entrées de chaque port (PE1, PE2) sont ordonnées de façon à recevoir respectivement les bits du mot correspondant depuis le bit de poids faible jusqu'au bit de poids fort,
**par le fait que** les moyens de sélection comportent des duplexeurs (D511...D115) reliés à certaines au moins des entrées des deux ports, de telle sorte que les paires d'entrées des duplexeurs ainsi reliés sont respectivement connectées à des paires d'entrées (EYu, EXv) des deux ports ayant des rangs (u, v) de somme (u + v) constante,
et **par le fait que** les moyens d'adressage comportent des moyens de commande aptes à élaborer, à partir de la valeur de k choisie, des informations de commande (ICkuv) pour les duplexeurs (Duv) ainsi reliés.

4. Dispositif électronique d'adressage de mémoire, pour une mémoire (MM) pour une mémoire organisée par bancs dont l'espace-mémoire utile comporte au moins 2^{b} bancs (B1-B16) de M bits chacun, avec b ≥ 1, l'espace-mémoire utile de chaque banc étant configurable en 2ⁿ cellules-mémoire de D bits, chaque cellule-mémoire étant adressable d'une part par un mot d'adresse-banc (MAB) d'au moins b bits représentant, dans l'espace-mémoire de la mémoire, l'adresse du banc contenant ladite cellule, et d'autre part par un mot d'adresse-cellule (MAC) de n bits n étant un entier positif, comprenant :
- des moyens d'entrée comportant un premier port d'entrée (PE1) et un deuxième port d'entrée (PE2) dont la somme des entrées est supérieure à la somme s égale à n + b, pour recevoir des paires de premiers mots de k bits et de deuxièmes mots de s - k bits, chaque ensemble de s bits représentant une information d'adresse (IAD) d'un point (PO) d'un espace bidimensionnel de points associés à des données codées sur D bits, les bits respectifs des premier et deuxième mots représentant deux coordonnées (X, Y) du point dans ledit espace,
- une entrée de configuration pour recevoir une valeur configurable de k, choisie supérieure ou égal à b et inférieure ou égale à s - b, et représentative d'une configuration géométrique choisie pour l'espace bidimensionnel (IM),
- des moyens d'adressage, commandables à partir de la valeur de k, aptes à convertir selon une loi de conversion injective prédéterminée, chaque information d'adresse (IAD) d'un point en un mot d'adresse-mémoire comportant le mot d'adresse-cellule (MAC) et le mot d'adresse-banc (MAB), et comportant des moyens de sélection (MS) aptes, en présence de mots d'information d'adresse de s bits, à sélectionner les entrées du premier port (PE1) recevant les k bits de chaque premier mot et les entrées du deuxième port recevant les s - k bits de chaque deuxième mot pour former un mot intermédiaire de s bits, et des moyens de génération d'adresse (MG) aptes à former à partir des s bits du mot intermédiaire, le mot d'adresse-cellule (MAC) de n bits et le mot d'adresse-banc (MAB) d'au moins b bits permettant d'adresser la cellule-mémoire dans laquelle sera stockée la donnée associée audit point,
de façon à pouvoir adresser le même espace-mémoire utile à partir d'un espace bidimensionnel de configurations géométriques différentes, en particulier une image vidéo.

5. Dispositif selon la revendication 4, **caractérisé par le fait que** M est égal à 2^{m}, et D est égal à 2^{d}, d étant un entier positif ou nul, la somme n+d étant égale à m.

6. Dispositif selon la revendication 4 ou 5, **caractérisé par le fait que** chaque port d'entrée (PE1, PE2) comporte s- b entrées et **par le fait que** les moyens de sélection sélectionnent les b premiers bits de chacun des premier et deuxième mots, quelle que soit la valeur de k, pour former le mot intermédiaire.

7. Dispositif selon la revendication 6, **caractérisé par le fait que** les moyens de génération (MG) génèrent le mot d'adresse-cellule (MAC) à partir des b premiers bits (Y1 - Y4) de l'un des premier et deuxième mots, et des n - b autres bits sélectionnés par les moyens de sélection et différents des b premiers bits (X1-X4) de l'autre des premier et deuxième mots.

8. Dispositif selon l'une des revendications 5 à 7, **caractérisé par le fait que** les moyens de génération déterminent le mot d'adresse-banc (MAB) de b bits à partir des b premiers bits (Y1-Y4; X1-X4) de chacun des premier et deuxième mots.

9. Dispositif selon l'une des revendications 5 à 7, **caractérisé par le fait que** la mémoire comporte p bancs, et **par le fait que** les moyens de génération déterminent le mot d'adresse-banc (MAB) à partir d'une relation linéaire modulo p entre les deux coordonnées du point.

10. Dispositif selon la revendication 9, **caractérisé par le fait que** le nombre de bancs p est pris égal à un nombre premier supérieur à 2^{b}, par exemple le premier nombre premier supérieur à 2^{b}.

11. Dispositif selon la revendication 8, **caractérisé par le fait que** les moyens de sélection sont aptes à substituer au moins le plus fort bit d'adressage (Yk) de l'un des premier et deuxième mots par le b^{ème} bit (X4) de l'autre des premier et deuxième mots pour former le mot intermédiaire de s bits, et les moyens de génération forcent alors le b^{ème} bit du premier mot à une valeur prédéterminée (BF3).

12. Dispositif selon l'une des revendications 4 à 11, **caractérisé par le fait que** les entrées de chaque port (PE1, PE2) sont ordonnées de façon à recevoir respectivement les bits du mot correspondant depuis le bit de poids faible jusqu'au bit de poids fort,
**par le fait que** les moyens de sélection comportent des duplexeurs (D511...D115) reliés à certaines au moins des entrées des deux ports, de telle sorte que les paires d'entrées des duplexeurs ainsi reliés sont respectivement connectées à des paires d'entrées (EYu, EXv) des deux ports ayant des rangs (u, v) de somme (u + v) constante,
et **par le fait que** les moyens d'adressage comportent des moyens de commande aptes à élaborer, à partir de la valeur de k choisie, des informations de commande (ICkuv) pour les duplexeurs (Duv) ainsi reliés.

13. Dispositif selon la revendication 12, **caractérisé par le fait que** chaque port d'entrée comporte s - b entrées,
**par le fait que** les premières entrées de duplexeurs commandés (Duv) sont respectivement reliées aux entrées du premier port (PE1) de rangs b + 1 à au plus s-b-2 et les deuxièmes entrées des duplexeurs sont respectivement reliées aux entrées du deuxième port (PE2) de rang s-b-2 à b+1,
**par le fait que** les moyens de sélection sélectionnent les b premiers bits de chacun des premier et deuxième mots, les bits délivrés par la sortie des duplexeurs (Duv) commandés, et au moins deux autres bits (G, H) sélectionnés, en fonction d'une information d'état de configuration mémoire (ICP1, ICP2), dans le groupe formé par au moins les deux plus forts bits d'adressage du premier ou du deuxième mot, et au moins le b^{ème} bit (X4) de l'un des premier et deuxième mots, et **par le fait que** les moyens de génération génèrent le mot d'adresse-cellule (MAC) à partir des premiers bits (Y1-Y4) de l'un des premier et deuxième mots, des bits (S5-S9) délivrés par les duplexeurs commandés, et de l'un au moins desdits deux autres bits (G, H).

14. Dispositif selon l'une des revendications 5 à 13, **caractérisé par le fait que** les moyens d'entrée comportent 2^{b} paires de ports d'entrée destinés à recevoir respectivement et simultanément 2^{b} informations d'adresses (IAD) choisies et correspondant à 2^{b} mots d'adresse-bancs distincts (B1-B16) compte tenu de la loi de conversion injective prédéterminée (TIM), de façon à pouvoir accéder ou lire simultanément une pluralité de données en évitant des conflits d'accès à des bancs identiques.

15. Dispositif selon la revendication 14 prise en combinaison avec la revendication 11, **caractérisé par le fait que** la mémoire (MM) est partitionnée en autant de blocs-mémoire indépendants que de bits du premier mot forcés à une valeur prédéterminée (BF3).

16. Dispositif électronique d'adressage de mémoire, pour une mémoire (MM) pour une mémoire organisée par bancs dont l'espace-mémoire utile comporte au moins 2^{b} bancs (B1-B16) de 2^{m} bits chacun, avec b ≥ 1, l'espace-mémoire utile de chaque banc étant configurable en 2ⁿ cellules-mémoire de 2^{d} bits, n étant un entier positif et d étant un entier positif, la somme n+d étant égale à m, chaque cellule-mémoire étant adressable d'une part par un mot d'adresse-banc (MAB) d'au moins b bits représentant, dans l'espace-mémoire de la mémoire, l'adresse du banc contenant ladite cellule, et d'autre part par un mot d'adresse-cellule (MAC), comprenant :
- des moyens d'entrée comportant un premier port d'entrée (PE1) et un deuxième port d'entrée (PE2) dont la somme des entrées est supérieure à la somme s égale à n + b, pour recevoir des paires de premiers mots de k bits et de deuxièmes mots de s - k bits, chaque ensemble de s bits représentant une information d'adresse (IAD) d'un point (PO) d'un espace bidimensionnel de points associés à des données codées sur 2^{d+do} bits, les bits respectifs des premier et deuxième mots représentant deux coordonnées (X, Y) du point dans ledit espace,
- une entrée de configuration pour recevoir une valeur configurable de k, choisie supérieure ou égal à b et inférieure ou égale à s - b, et représentative d'une configuration géométrique choisie pour l'espace bidimensionnel (IM),
- des moyens d'adressage, commandables à partir de la valeur de k, aptes à convertir selon une loi de conversion injective prédéterminée, chaque information d'adresse (IAD) d'un point en un mot d'adresse-mémoire comportant le mot d'adresse-cellule (MAC) et le mot d'adresse-banc (MAB), et comportant des moyens de sélection (MS) aptes, en présence de mots d'information d'adresse de s - do bits, à sélectionner les entrées du premier port (PE1) recevant les k - do bits de chaque premier mot et les entrées du deuxième port recevant les s-k bits de chaque deuxième mot pour former un mot intermédiaire de s - do bits, et des moyens de génération d'adresse (MG) aptes à former à partir des s - do bits du mot intermédiaire, le mot d'adresse-cellule (MAC) de n - do bits et le mot d'adresse-banc (MAB) d'au moins b bits permettant d'adresser la cellule-mémoire dans laquelle sera stockée la donnée associée audit point,
de façon à pouvoir adresser le même espace-mémoire utile à partir d'un espace bidimensionnel de configurations géométriques différentes, en particulier une image vidéo.

17. Dispositif selon la revendication 16, **caractérisé par le fait que** chaque port d'entrée (PE1, PE2) comporte s - do - b entrées et **par le fait que** les moyens de sélection sélectionnent les b premiers bits de chacun des premier et deuxième mots, quelle que soit la valeur de k, pour former le mot intermédiaire.

18. Dispositif selon la revendication 17, **caractérisé par le fait que** les moyens de génération (MG) génèrent le mot d'adresse-cellule (MAC) à partir des b premiers bits (Y1- Y4) de l'un des premier et deuxième mots, et des ni - b autres bits sélectionnés par les moyens de sélection et différents des b premiers bits (X1-X4) de l'autre des premier et deuxième mots.

19. Dispositif selon l'une des revendications 16 à 18, **caractérisé par le fait que** les moyens de génération déterminent le mot d'adresse-banc de b bits à partir des b premiers bits (Y1-Y4; X1-X4) de chacun des premier et deuxième mots.

20. Dispositif selon l'une des revendications 16 à 19, **caractérisé par le fait que** la mémoire comporte p bancs, et **par le fait que** les moyens de génération déterminent le mot d'adresse-bane (MAB) à partir d'une relation linéaire modulo p entre les deux coordonnées du point.

21. Dispositif selon la revendication 20, **caractérisé par le fait que** le nombre de bancs p est pris égal à un nombre premier supérieur à 2^{b}, par exemple le premier nombre premier supérieur à 2^{b}.

22. Dispositif selon la revendication 19, **caractérisé par le fait que** les moyens de sélection sont aptes à substituer au moins le plus fort bit d'adressage (Yk) de l'un des premier et deuxième mots par le b^{ème} bit (X4) de l'autre des premier et deuxième mots former le mot intermédiaire de s - do bits, et les moyens de génération forcent alors le b^{ème} bit du premier mot à une valeur prédéterminée (BF3).

23. Dispositif selon l'une des revendications 16 à 22, **caractérisé par le fait que** les entrées de chaque port (PE1, PE2) sont ordonnées de façon à recevoir respectivement les bits du mot correspondant depuis le bit de poids faible jusqu'au bit de poids fort,
**par le fait que** les moyens de sélection comportent des duplexeurs (D511...D115) reliés à certaines au moins des entrées des deux ports, de telle sorte que les paires d'entrées des duplexeurs ainsi reliés sont respectivement connectées à des paires d'entrées (EYu, EXv) des deux ports ayant des rangs (u, v) de somme (u + v) constante,
et **par le fait que** les moyens d'adressage comportent des moyens de commande aptes à élaborer, à partir de la valeur de k choisie, des informations de commande (ICkuv) pour les duplexeurs (Duv) ainsi reliés.

24. Dispositif selon la revendication 23, **caractérisé par le fait que** chaque port d'entrée comporte s - b entrées,
**par le fait que** les premières entrées de duplexeurs commandés (Duv) sont respectivement reliées aux entrées du premier port (PE1) de rangs b + 1 à au plus s-b-2 et les deuxièmes entrées des duplexeurs sont respectivement reliées aux entrées du deuxième port (PE2) de rang s-b-2 à b+1,
**par le fait que** les moyens de sélection sélectionnent les b premiers bits de chacun des premier et deuxième mots, les bits délivrés par la sortie des duplexeurs (Duv) commandés, et au moins deux autres bits (G, H) sélectionnés, en fonction d'une information d'état de configuration mémoire (ICP1, ICP2), dans le groupe formé par au moins les deux plus forts bits d'adressage du premier ou du deuxième mot, et au moins le b^{ème} bit (X4) de l'un des premier et deuxième mots, et **par le fait que** les moyens de génération génèrent le mot d'adresse-cellule (MAC) à partir des premiers bits (Y1-Y4) de l'un des premier et deuxième mots, des bits (S5-S9) délivrés par les duplexeurs commandés, et de l'un au moins desdits deux autres bits (G, H).

25. Dispositif selon l'une des revendications 16 à 24, **caractérisé par le fait que** les moyens d'entrée comportent 2^{b} paires de ports d'entrée destinés à recevoir respectivement et simultanément 2^{b} informations d'adresses (IAD) choisies et correspondant à 2^{b} mots d'adresse-bancs distincts (B1-B16) compte tenu de la loi de conversion injective prédéterminée (TIM), de façon à pouvoir accéder ou lire simultanément une pluralité de données en évitant des conflits d'accès à des bancs identiques.

26. Dispositif selon la revendication 25 prise en combinaison avec la revendication 22, **caractérisé par le fait que** la mémoire (MM) est partitionnée en autant de blocs-mémoire indépendants que de bits du premier mot forcés à une valeur prédéterminée (BF3).

## Patentansprüche

1. Elektronische Speicheradressiervorrichtung für einen Speicher (MM), der einen Nutzspeicherplatz von M Bits, der in 2ⁿ Seicherzellen zu D Bits konfigurierbar ist, umfaßt, wobei jede Speicherzelle von einem Zelladresswort (MAC) von n Bits, wobei n eine positive ganze Zahl ist, adressierbar ist, umfassend:
Eingangsmittel, die einen ersten Eingangspunkt (PE1) und einen zweiten Eingangspunkt (PE2) umfassen, wobei die Summe der Eingänge größer als n ist, um Paare von ersten Wörtern von k Bits und von zweiten Wörtern von n - k Bits zu empfangen, wobei jede Einheit der n Bits eine Adressinformation eines Punktes (PO) eines zweidimensionalen Raumes von Punkten darstellt, die auf D Bits codierten Daten zugeordnet sind, wobei die jeweiligen Bits der ersten und zweiten Wörter zwei Koordinaten (X, Y) des Punktes in diesem Raum darstellen;
einen Konfigurationseingang, um einen konfigurierbaren Wert von k empfangen zu können, der positiv oder gleich Null gewählt wird und kleiner oder gleich n ist und für eine für den zweidimensionalen Raum (IM) ausgewählte geometrische Konfiguration steht;
Adressiermittel, die von dem Wert von k steuerbar sind und Auswahlmittel (MS) umfassen, um die Eingänge des ersten Verbindungsendpunktes, die die k Bits jedes ersten Wortes empfangen, und die Eingänge des zweiten Verbindungsendpunktes, die die n - k Bits jedes zweiten Wortes empfangen, auszuwählen, sowie Adresserzeugungsmittel (MG), um von den ausgewählten Bits ein Zelladresswort (MAC) von n Bits zu bilden, das es ermöglicht, die Speicherzelle zu adressieren, in der die dem Punkt zugeordneten Daten gespeichert sind;
so daß derselbe Nutzspeicherplatz auch von einem zweidimensionalen Raum unterschiedlicher geometrischer Konfigurationen, insbesondere einem Videobild, adressiert werden kann.

2. Vorrichtung nach Anspruch 1, **dadurch gekennzeichnet, daß** M gleich 2^{m} und D gleich 2^{d} ist, wobei d eine positive ganze Zahl oder gleich Null ist, wobei die Summe von n + d gleich m ist.

3. Vorrichtung nach einem der vorhergehenden Ansprüche, **dadurch gekennzeichnet, daß** die Eingänge jedes Verbindungsendpunktes (PE1, PE2) derart geordnet sind, daß sie die Bits des entsprechenden Wortes vom Bit mit dem geringsten Gewicht bis zum Bit mit dem größten Gewicht empfangen,
daß die Auswahlmittel Duplexer (D511...D115) umfassen, die an zumindest manche der Eingänge der beiden Verbindungsendpunkte angeschlossen sind, daß die Eingangspaare der auf diese Weise verbundenen Duplexer jeweils mit Eingangspaaren (EYu, EXv) der beiden Verbindungsendpunkte verbunden sind, die Ränge (u, v) mit konstanter Summe (u + v) aufweisen,
und daß die Adressiermittel Steueimittel umfassen, die in der Lage sind, auf Basis des ausgewählten Wertes von k Steuerinformationen (ICkuv) für die auf diese Weise verbundenen Duplexer (Duv) auszuarbeiten.

4. Elektronische Speicheradressiervorrichtung für einen Speicher (MM), der in Banken organisiert ist und dessen Nutzspeicherplatz mindestens 2^{b} Banken (B1 - B16) zu jeweils M Bits umfaßt, wobei b ≥ 1, wobei der Nutzspeicherplatz jeder Bank in 2ⁿ Speicherzellen zu D Bits konfigurierbar ist, wobei jede Speicherzelle einerseits durch ein Bankadresswort (MAB) von mindestens b Bits, die in dem Speicherplatz des Speichers die Adresse der Bank darstellen, die die Zelle enthält, und andererseits durch ein Zelladresswort (MAC) zu n Bits, wobei n eine positive ganze Zahl ist, adressierbar ist, umfassend.
Eingangsmittel, die einen ersten Eingangspunkt (PE1) und einen zweiten Eingangspunkt (PE2) umfassen, deren Summe der Eingänge größer als die Summe s gleich n + b ist, um Paare von ersten Wörtern zu k Bits und von zweiten Wörtern zu s - k Bits zu empfangen, wobei jede Einheit von s Bits eine Adressinformation (IAD) eines Punktes (PO) eines zweidimensionalen Raumes von Punkten, die auf D Bits codierten Daten zugeordnet sind, darstellt, wobei die jeweiligen Bits der ersten und zweiten Wörter zwei Koordinaten (X, Y) des Punktes in diesem Raum darstellen,
einen Konfigurationseingang, um einen konfigurierbaren Wert von k zu empfangen, der größer oder gleich b und kleiner oder gleich s - b gewählt wird und für eine ausgewählte geometrische Konfiguration des zweidimensionalen Raumes (IM) repräsentativ ist,
Adressiermittel, die auf Basis des Wertes von k steuerbar und in der Lage sind, nach einem vorbestimmten injektiven Umwandlungsgesetz jede Adressinformation (IAD) eines Punktes in ein Speicheradresswort umzuwandeln, umfassend das Zelladresswort (MAC) und das Bankadresswort (MAB) und umfassend Auswahlmittel (MS), die in der Lage sind, im Beisein von Adressinformationswörtern zu s Bits die Eingänge des ersten Verbindungsendpunktes (PE1), der die k Bits jedes ersten Wortes empfängt, und die Eingänge des zweiten Verbindungsendpunktes auszuwählen, der die s - k Bits jedes zweiten Wortes empfängt, um ein Zwischenwort von s Bits zu bilden, und Adresserzeugungsmittel (MG), die in der Lage sind, auf Basis der s Bits des Zwischenwortes das Zelladresswort (MAC) zu n Bits und das Bankadresswort (MAB) von mindestens b Bits zu bilden, wodurch es möglich ist, die Speicherzelle zu adressieren, in der die dem Punkt zugeordneten Daten gespeichert sind,
um denselben Nutzspeicherplatz von einem zweidimensionalen Raum unterschiedlicher geometrischer Konfigurationen, insbesondere einem Videobild, aus adressieren zu können.

5. Vorrichtung nach Anspruch 4, **dadurch gekennzeichnet, daß** M gleich 2^{m} und D gleich 2^{d} ist, wobei d eine ganze positive Zahl oder gleich Null ist, wobei die Summe von n + d gleich m ist.

6. Vorrichtung nach Anspruch 4 oder 5, **dadurch gekennzeichnet, daß** jeder Eingangspunkt (PE1, PE2) s - b Eingänge umfaßt, und daß die Auswahlmittel die b ersten Bits jedes der ersten und zweiten Wörter auswählen, unabhängig von dem Wert von k, um das Zwischenwort zu bilden.

7. Vorrichtung nach Anspruch 6, **dadurch gekennzeichnet, daß** die Erzeugungsmittel (MG) das Zelladresswort (MAC) aus den b ersten Bits (Y1 - Y4) eines der ersten und zweiten Wörter und den n - b anderen Bits, die von den Auswahlmitteln ausgewählt wurden und sich von den b ersten Bits (X1 - X4) des anderen der ersten und zweiten Wörter unterscheiden, bilden.

8. Vorrichtung nach einem der Ansprüche 5 bis 7, **dadurch gekennzeichnet, daß** die Erzeugungsmittel das Bankadresswort (MAB) von b Bits aus den b ersten Bits (Y1 - Y4; X1 - X4) jedes der ersten und zweiten Wörter bestimmen.

9. Vorrichtung nach einem der Ansprüche 5 bis 7, **dadurch gekennzeichnet, daß** der Speicher p Banken umfaßt, und daß die Erzeugungsmittel das Bankadresswort (MAB) aus einem linearen Moduloverhältnis p zwischen den beiden Koordinaten des Punktes besfimmen.

10. Vorrichtung nach Anspruch 9, **dadurch gekennzeichnet, daß** die Anzahl von Banken p gleich einer ersten Zahl größer als 2^{b} angenommen wird, beispielsweise die erste Zahl eins größer als 2^{b} ist.

11. Vorrichtung nach Anspruch 8, **dadurch gekennzeichnet, daß** die Auswahlmittel in der Lage sind, zumindest das stärkste Adressierbit (Yk) eines der ersten und zweiten Wörter durch das b-te Bit (X4) des anderen der ersten und zweiten Wörter zu ersetzen, um das Zwischenwort von s Bits zu bilden, und die Erzeugungsmittel nun das b-te Bit des ersten Wortes auf einen bestimmten Wert (BF3) bringen.

12. Vorrichtung nach einem der Ansprüche 4 bis 11, **dadurch gekennzeichnet, daß** die Eingänge jedes Verbindungsendpunktes (PE1, PE2) derart geordnet sind, daß sie die Bits des entsprechenden Wortes von dem Bit mit geringem Gewicht bis zu dem Bit mit großem Gewicht empfangen,
daß die Auswahlmittel Duplexer (D511...D115) umfassen, die mit zumindest manchen der Eingänge der beiden Verbindungsendpunkte verbunden sind, so daß die Eingangspaare der auf diese Weise verbundenen Duplexer jeweils an Eingangspaare (EYu, EXv) der beiden Verbindungsendpunkte angeschlossen sind, die Ränge (u, v) mit konstanter Summe (u + v) aufweisen,
und daß die Adressiermittel Steuenmittel umfassen, die in der Lage sind, auf Basis des gewählten Wertes von k Steuerinformationen (ICkuv) für die auf diese Weise verbundenen Duplexer (Duv) auszuarbeiten.

13. Vorrichtung nach Anspruch 12, **dadurch gekennzeichnet, daß** jeder Eingangspunkt s - b Eingänge umfaßt,
daß die ersten Eingänge von gesteuerten Duplexem (Duv) jeweils an die Eingänge des ersten Verbindungsendpunktes (PE1) mit den Rängen b + 1 bis höchstens s - b - 2 und die zweiten Eingänge der Duplexer jeweils an die Eingänge des zweiten Verbindungsendpunktes (PE2) mit dem Rang s - b - 2 bis b + 1 angeschlossen sind,
daß die Auswahlmittel die b ersten Bits jedes der ersten und zweiten Wörter, die von dem Ausgang der gesteuerten Duplexer (Duv) gelieferten Bits und mindestens zwei weitere ausgewählte Bits (G, H), in Abhängigkeit von einer Zustandsinformation über die Speicherkonfiguration (ICP1, ICP2) in der von mindestens den beiden stärksten Adressierbits des ersten oder des zweiten Wortes gebildeten Gruppe, und mindestens das b-te Bit (X4) eines der ersten und zweiten Wörter auswählen, und daß die Erzeugungsmittel das Zelladresswort (MAC) aus den ersten Bits (Y1 - Y4) eines der ersten und zweiten Wörter, den Bits (S5 - S9), die von den gesteuerten Duplexern gelieferten wurden, und zumindest einem der beiden anderen Bits (G, H) erzeugen.

14. Vorrichtung nach einem der Ansprüche 5 bis 13, **dadurch gekennzeichnet, daß** die Eingangsmittel 2^{b} Paare von Eingangspunkten umfassen, die dazu bestimmt sind, jeweils gleichzeitig 2^{b} ausgewählte Adressinformationen (IAD) zu empfangen, die 2^{b} unterschiedlichen Bankadresswörtern (B1 - B16) unter Berücksichtigung des vorbestimmten injektiven Umwandlungsgesetzes (TIM) entsprechen, so daß gleichzeitig auf eine Vielzahl von Daten zugegriffen werden kann oder diese abgelesen werden können, wobei Zugriffskonflikte auf identische Banken vermieden werden.

15. Vorrichtung nach Anspruch 14 in Kombination mit Anspruch 11, **dadurch gekennzeichnet, daß** der Speicher (MM) in ebenso viele unabhängige Speicherblöcke wie Bits des ersten Wortes, die auf einen vorbestimmten Wert gebracht werden (BF3), unterteilt wird.

16. Elektronische Speicheradressiervorrichtung für einen Speicher (MM) für einen in Banken organisierten Speicher, dessen Nutzspeicherplatz mindestens 2^{b}Banken (B1 - B16) zu jeweils 2^{m} Bits umfaßt, wobei b ≥ 1, wobei der Nutzspeicherplatz jeder Bank in 2ⁿ Speicherzellen zu 2^{d}Bits konfigurierbar ist, wobei n eine positive ganze Zahl und d eine positive ganze Zahl ist, und die Summe n + d gleich m ist, wobei jede Speicherzelle einerseits von einem Bankadresswort (MAB) von mindestens b Bits, die in dem Speicherplatz des Speichers die Adresse der die Zelle enthaltenden Bank darstellt, und andererseits von einem Zelladresswort (MAC) adressierbar ist, umfassend:
Eingangsmittel, die einen ersten Eingangspunkt (PE1) und einen zweiten Eingangspunkt (PE2) umfassen, deren Summe der Eingänge größer als die Summe s gleich n + b ist, um Paare von ersten Wörtern zu k Bits und von zweiten Wörtern zu s - k Bits zu empfangen, wobei jede Einheit von s Bits eine Adressinformation (IAD) eines Punktes (PO) eines zweidimensionalen Raumes von Punkten, die auf 2^{d+do} Bits codierten Daten zugeordnet sind, darstellt, wobei die jeweiligen Bits der ersten und zweiten Wörter zwei Koordinaten (X, Y) des Punktes in diesem Raum darstellen,
einen Konfigurationseingang, um einen konfigurierbaren Wert von k zu empfangen, der größer oder gleich b und kleiner oder gleich s - b gewählt wird und für eine ausgewählte geometrische Konfiguration des zweidimensionalen Raumes (IM) repräsentativ ist,
Adressiermittel, die auf Basis des Wertes von k steuerbar und in der Lage sind, nach einem vorbestimmten injektiven Umwandlungsgesetz jede Adressinformation (IAD) eines Punktes in ein Speicheradresswort umzuwandeln, umfassend das Zelladresswort (MAC) und das Bankadresswort (MAB) und umfassend Auswahlmittel (MS), die in der Lage sind, im Beisein von Adressinformationswörtern zu s - do Bits die Eingänge des ersten Verbindungsendpunktes (PE1), der die k - do Bits jedes ersten Wortes empfängt, und die Eingänge des zweiten Verbindungsendpunktes auszuwählen, der die s - k Bits jedes zweiten Wortes empfängt, um ein Zwischenwort von s - do Bits zu bilden, und Adresserzeugungsmittel (MG), die in der Lage sind, auf Basis der s - do Bits des Zwischenwortes das Zelladresswort (MAC) zu n - do Bits und das Bankadresswort (MAB) von mindestens b Bits zu bilden, wodurch es möglich ist, die Speicherzelle zu adressieren, in der die dem Punkt zugeordneten Daten gespeichert sind,
um denselben Nutzspeicherplatz von einem zweidimensionalen Raum unterschiedlicher geometrischer Konfigurationen, insbesondere einem Videobild, aus adressieren zu können.

17. Vorrichtung nach Anspruch 16, **dadurch gekennzeichnet, daß** jeder Eingangspunkt (PE1, PE2) s - do - b Eingänge umfaßt, und daß die Auswahlmittel die b ersten Bits jedes der ersten und zweiten Wörter auswählen, unabhängig von dem Wert von k, um das Zwischenwort zu bilden.

18. Vorrichtung nach Anspruch 17, **dadurch gekennzeichnet, daß** die Erzeugungsmittel (MG) das Zelladresswort (MAC) aus den b ersten Bits (Y1 - Y4) eines der ersten und zweiten Wörter und den n₁ - b anderen von den Auswahlmitteln ausgewählten Bits, die sich von den b ersten Bits (X1 - X4) des anderen der ersten und zweiten Wörter unterscheiden, erzeugen.

19. Vorrichtung nach einem der Ansprüche 16 bis 18, **dadurch gekennzeichnet, daß** die Erzeugungsmittel das Bankadresswort zu b Bits aus den b ersten Bits (Y1 - Y4; X1 - X4) jedes der ersten und zweiten Wörter bestimmen.

20. Vorrichtung nach einem der Ansprüche 16 bis 19, **dadurch gekennzeichnet, daß** der Speicher p Banken umfaßt, und daß die Erzeugungsmittel das Bankadresswort (MAB) aus einem linearen Moduloverhältnis p zwischen den beiden Koordinaten des Punktes bestimmen.

21. Vorrichtung nach Anspruch 20, **dadurch gekennzeichnet, daß** die Anzahl von Banken p gleich einer ersten Zahl größer als 2^{b}, beispielsweise die erste Zahl eins größer als 2^{b}, ist.

22. Vorrichtung nach Anspruch 19, **dadurch gekennzeichnet, daß** die Auswahlmittel in der Lage sind, zumindest das stärkste Adressierbit (Yk) eines der ersten und zweiten Wörter durch das b-te Bit (X4) des anderen der ersten und zweiten Wörter zu ersetzen, um das Zwischenwort von s - do Bits zu bilden, und die Erzeugungsmittel nun das b-te Bit des ersten Wortes auf einen vorbestimmten Wert (BF3) bringen.

23. Vorrichtung nach einem der Ansprüche 16 bis 22, **dadurch gekennzeichnet, daß** die Eingänge jedes Verbindungsendpunktes (PE1, PE2) derart geordnet sind, daß sie jeweils die Bits des entsprechenden Wortes vom Bit mit dem geringsten Gewicht bis zum Bit mit dem größten Gewicht empfangen,
daß die Auswahlmittel Duplexer (D511...D115) umfassen, die mit zumindest einigen der Eingänge der beiden Verbindungsendpunkte verbunden sind, so daß die Eingangspaare der auf diese Weise verbundenen Duplexer jeweils an die Eingangspaare (EYu, EXv) der beiden Verbindungsendpunkte angeschlossen sind, die Ränge (u, v) mit konstanter Summe (u + v) aufweisen,
und daß die Adressiermittel Steuermittel umfassen, die in der Lage sind, aus dem ausgewählten Wert von k Steuerinformationen (ICkuv) für die auf diese Weise verbundenen Duplexer (Duv) auszuarbeiten.

24. Vorrichtung nach Anspruch 23, **dadurch gekennzeichnet, daß** jeder Eingangspunkt s - b Eingänge umfaßt,
daß die ersten Eingänge der gesteuerten Duplexer (Duv) jeweils mit den Eingängen des ersten Verbindungsendpunktes (PE1) der Ränge b + 1 bis höchstens s - b - 2 und die zweiten Eingänge der Duplexer jeweils mit den Eingängen des zweiten Verbindungsendpunktes (PE2) der Ränge s - b - 2 bis b + 1 verbunden sind,
daß die Auswahlmittel die b ersten Bits jedes der ersten und zweiten Wörter, die von dem Ausgang der gesteuerten Duplexer (Duv) gelieferten Bits und mindestens zwei weitere ausgewählte Bits (G, H) auswählen, in Abhängigkeit von einer Zustandsinformation der Speicherkonfiguration (ICP1, ICP2) in der Gruppe, die von mindestens den beiden stärksten Adressierbits des ersten oder des zweiten Wortes und mindestens dem b-ten Bit (X4) eines der ersten und zweiten Wörter gebildet wird, und daß die Erzeugungsmittel das Zelladresswort (MAC) aus den ersten Bits (Y1 - Y4) eines der ersten und zweiten Wörter, den Bits (S5 - S9), die von den gesteuerten Duplexern geliefert werden, und mindestens einem der beiden anderen Bits (G, H) erzeugen.

25. Vorrichtung nach einem der Ansprüche 16 bis 24, **dadurch gekennzeichnet, daß** die Eingangsmittel 2^{b} Paare von Eingangspunkten umfassen, die dazu bestimmt sind, jeweils gleichzeitig 2^{b} ausgewählte Adressinformationen (IAD), die 2^{b}unterschiedlichen Bankadresswörtern (B 1 - B 16) entsprechen, zu empfangen, unter Berücksichtigung des vorbestimmten injektiven Umwandlungsgesetzes (TIM), um gleichzeitig auf eine Vielzahl von Daten zugreifen zu können oder diese ablesen zu können, indem Zugriffskonflikte auf identische Banken vermieden werden.

26. Vorrichtung nach Anspruch 25 in Kombination mit Anspruch 22, **dadurch gekennzeichnet, daß** der Speicher (MM) in ebenso viele unabhängige Speicherblöcke unterteilt ist, wie Bits des ersten Wortes vorhanden sind, die auf einen vorbestimmten Wert (BF3) gebracht wurden.

## Claims

1. Electronic memory addressing device, for a memory (MM) comprising a useful memory space of M bits configurable as 2ⁿ memory cells of D bits, each memory cell being addressable by a cell address word (MAC) of n bits, n being a positive integer, comprising:
- input means comprising a first input port (PE1) and a second input port (PE2), the sum of whose inputs is greater than n, for receiving pairs of first words of k bits and of second words of n - k bits, each set of n bits representing an address cue of a point (PO) of a two-dimensional space of points associated with data coded on D bits, the respective bits of the first and second words representing two coordinates (X, Y) of the point in the said space,
- a configuration input for receiving a configurable value of k, chosen to be positive or zero and less than or equal to n, and representative of a chosen geometrical configuration for the two-dimensional space (IM),
- addressing means, controllable on the basis of the value of k, comprising selection means (MS) for selecting the inputs of the first port receiving the k bits of each first word and the inputs of the second port receiving the n - k bits of each second word, and address generation means (MG) for forming, from the selected bits, a cell address word (MAC) of n bits making it possible to address the memory cell in which the datum associated with the said point will be stored,
in such a way as to be able to address the same useful memory space from a two-dimensional space of different geometrical configurations and in particular a video image.

2. Device according to Claim 1, **characterized in that** M is equal to 2^{m} and D is equal to 2^{d}, d being a positive integer or zero, the sum n + d being equal to m.

3. Device according to one of the preceding claims, **characterized in that** the inputs of each port (PE1, PE2) are ordered in such a way as to receive respectively the bits of the corresponding word from the low-order bit up to the high-order bit,
**in that** the selection means comprise duplexers (D511...D115) linked to some at least of the inputs of the two ports, so that the pairs of inputs of the duplexers thus linked are connected respectively to pairs of inputs (EYu, EXv) of the two ports having ranks (u, v) of constant sum (u + v),
and **in that** the addressing means comprise control means able to formulate, from the chosen value of k, control cues (ICkuv) for the duplexers (Duv) thus linked.

4. Electronic memory addressing device, for a memory (MM) for a memory [sic] organized in banks, the useful memory space of which comprises at least 2^{b} banks (B1-B16) each of M bits, with b ≥ 1, the useful memory space of each bank being configurable as 2ⁿ memory cells of D bits, each memory cell being addressable on the one hand by a bank address word (MAB) of at least b bits representing, in the memory space of the memory, the address of the bank containing the said cell, and on the other hand by a cell address word (MAC) of n bits, n being a positive integer, comprising:
- input means comprising a first input port (PE1) and a second input port (PE2), the sum of whose inputs is greater than the sum s equal to n + b, for receiving pairs of first words of k bits and of second words of s - k bits, each set of s bits representing an address cue (IAD) of a point (PO) of a two-dimensional space of points associated with data coded on D bits, the respective bits of the first and second words representing two co-ordinates (X, Y) of the point in the said space,
- a configuration input for receiving a configurable value of k, chosen to be greater than or equal to b and less than or equal to s - b, and representative of a chosen geometrical configuration for the two-dimensional space (IM),
- addressing means, controllable on the basis of the value of k, able to convert, according to a predetermined injective conversion law, each address cue (IAD) of a point into a memory address word comprising the cell address word (MAC) and the bank address word (MAB) and comprising selection means (MS) able, in the presence of address information words of s bits, to select the inputs of the first port (PE1) receiving the k bits of each first word and the inputs of the second port receiving the s - k bits of each second word so as to form an intermediate word of s bits, and address generation means (MG) able to form, from the s bits of the intermediate word, the cell address word (MAC) of n bits and the bank address word (MAB) of at least b bits making it possible to address the memory cell in which the datum associated with the said point will be stored,
in such a way as to be able to address the same useful memory space from a two-dimensional space of different geometrical configurations and in particular a video image.

5. Device according to Claim 4, **characterized in that** M is equal to 2^{m} and D is equal to 2^{d}, d being a positive integer or zero, the sum n + d being equal to m.

6. Device according to Claim 4 or 5, **characterized in that** each input port (PE1, PE2) comprises s - b inputs and **in that** the selection means select the first b bits of each of the first and second words, irrespective of the value of k, so as to form the intermediate word.

7. Device according to Claim 6, **characterized in that** the generation means (MG) generate the cell address word (MAC) from the first b bits (Y1 - Y4) of one of the first and second words, and from the other n - b bits selected by the selection means and differing from the first b bits (X1 - X4) of the other of the first and second words.

8. Device according to one of Claims 5 to 7, **characterized in that** the generation means determine the bank address word (MAB) of b bits from the first b bits (Y1 - Y4; X1 - X4) of each of the first and second words.

9. Device according to one of Claims 5 to 7, **characterized in that** the memory comprises p banks, and **in that** the generation means determine the bank address word (MAB) on the basis of a linear relation modulo p between the two co-ordinates of the point.

10. Device according to Claim 9, **characterized in that** the number of banks p is taken equal to a prime number greater than 2^{b}, for example the first prime number greater than 2^{b}.

11. Device according to Claim 8, **characterized in that** the selection means are able to substitute at least the highest addressing bit (Yk) of one of the first and second words with the b^{th} bit (X4) of the other of the first and second words so as to form the intermediate word of s bits, and the generation means then force the b^{th} bit of the first word to a predetermined value (BF3).

12. Device according to one of Claims 4 to 11, **characterized in that** the inputs of each port (PE1, PE2) are ordered in such a way as to receive respectively the bits of the corresponding word from the low-order bit up to the high-order bit,
**in that** the selection means comprise duplexers (D511...D115) linked to some at least of the inputs of the two ports, so that the pairs of inputs of the duplexers thus linked are connected respectively to pairs of inputs (EYu, Exv) of the two ports having ranks (u, v) of constant sum (u + v),
and **in that** the addressing means comprise control means able to formulate, from the chosen value of k, control cues (ICkuv) for the duplexers (Duv) thus linked.

13. Device according to Claim 12, **characterized in that** each input port comprises s - b inputs,
**in that** the first inputs of controlled duplexers (Duv) are respectively linked to the inputs of the first port (PE1) of ranks b + 1 to at most s-b-2 and the second inputs of the duplexers are respectively linked to the inputs of the second port (PE2) of rank s-b-2 to b+1,
**in that** the selection means select the first b bits of each of the first and second words, the bits delivered by the output of the controlled duplexers (Duv), and at least two other bits (G, H) selected, as a function of a memory configuration state cue (ICP1, ICP2), in the group formed by at least the highest two addressing bits of the first or of the second word, and at least the b^{th} bit (X4) of one of the first and second words, and **in that** the generation means generate the cell address word (MAC) from the first bits (Y1-Y4) of one of the first and second words, the bits (S5-S9) delivered by the controlled duplexers and one at least of the said other two bits (G, H).

14. Device according to one of Claims 5 to 13, **characterized in that** the input means comprise 2^{b} pairs of input ports intended to receive respectively and simultaneously 2^{b} chosen address cues (IAD) corresponding to 2^{b} distinct bank address words (B1-B16) having regard to the predetermined injective conversion law (TIM), in such a way as to be able to access or read a plurality of data simultaneously while avoiding conflicts of access to identical banks.

15. Device according to Claim 14 taken in combination with Claim 11, **characterized in that** the memory (MM) is partitioned into as many independent memory blocks as bits of the first word which are forced to a predetermined value (BF3).

16. Electronic memory addressing device, for a memory (MM) for a memory [sic] organized in banks whose useful memory space comprises at least 2^{b} banks (B1-B16) each of 2^{m} bits, with b ≥ 1, the useful memory space of each bank being configurable as 2ⁿ memory cells of 2^{d} bits, n m [sic] being a positive integer and d being a positive integer, the sum n + d being equal to m, each memory cell being addressable on the one hand by a bank address word (MAB) of at least b bits representing, in the memory space of the memory, the address of the bank containing the said cell, and on the other hand by a cell address word (MAC), comprising:
- input means comprising a first input port (PE1) and a second input port (PE2), the sum of whose inputs is greater than the sum s equal to n + b, for receiving pairs of first words of k bits and of second words of s - k bits, each set of s bits representing an address cue (IAD) of a point (PO) of a two-dimensional space of points associated with data coded on 2^{d+d0} bits, the respective bits of the first and second words representing two co-ordinates (X, Y) of the point in the said space,
- a configuration input for receiving a configurable value of k, chosen to be greater than or equal to b and less than or equal to s - b, and representative of a chosen geometrical configuration for the two-dimensional space (IM),
- addressing means, controllable on the basis of the value of k, able to convert, according to a predetermined injective conversion law, each address cue (IAD) of a point into a memory address word comprising the cell address word (MAC) and the bank address word (MAB) and comprising selection means (MS) able, in the presence of address information words of s-dO bits, to select the inputs of the first port (PE1) receiving the k-d0 bits of each first word and the inputs of the second port receiving the s - k bits of each second word so as to form an intermediate word of s - d0 bits, and address generation means (MG) able to form, from the s - d0 bits of the intermediate word, the cell address word (MAC) of n - d0 bits and the bank address word (MAB) of at least b bits making it possible to address the memory cell in which the datum associated with the said point will be stored,
in such a way as to be able to address the same useful memory space from a two-dimensional space of different geometrical configurations and in particular a video image.

17. Device according to Claim 16, **characterized in that** each input port (PE1, PE2) comprises s - d0 - b inputs and **in that** the selection means select the first b bits of each of the first and second words, irrespective of the value of k, so as to form the intermediate word.

18. Device according to Claim 17, **characterized in that** the generation means (MG) generate the cell address word (MAC) from the first b bits (Y1 - Y4) of one of the first and second words, and from the other n₁ - b bits selected by the selection means and differing from the first b bits (X1 - X4) of the other of the first and second words.

19. Device according to one of Claims 16 to 18, **characterized in that** the generation means determine the bank address word of b bits from the first b bits (Y1 - Y4; X1 - X4) of each of the first and second words.

20. Device according to one of Claims 16 to 19, **characterized in that** the memory comprises p banks, and **in that** the generation means determine the bank address word (MAB) on the basis of a linear relation modulo p between the two co-ordinates of the point.

21. Device according to Claim 20, **characterized in that** the number of banks p is taken equal to a prime number greater than 2^{b}, for example the first prime number greater than 2^{b}.

22. Device according to Claim 19, **characterized in that** the selection means are able to substitute at least the highest addressing bit (Yk) of one of the first and second words with the b^{th} bit (X4) of the other of the first and second words to form the intermediate word of s - d0 bits, and the generation means then force the b^{th} bit of the first word to a predetermined value (BF3).

23. Device according to one of Claims 16 to 22, **characterized in that** the inputs of each port (PE1, PE2) are ordered in such a way as to receive respectively the bits of the corresponding word from the low-order bit up to the high-order bit,
**in that** the selection means comprise duplexers (D511...D115) linked to some at least of the inputs of the two ports, so that the pairs of inputs of the duplexers thus linked are connected respectively to pairs of inputs (EYu, EXv) of the two ports having ranks (u, v) of constant sum (u + v),
and **in that** the addressing means comprise control means able to formulate, from the chosen value of k, control cues (ICkuv) for the duplexers (Duv) thus linked.

24. Device according to Claim 23, **characterized in that** each input port comprises s - b inputs,
**in that** the first inputs of controlled duplexers (Duv) are respectively linked to the inputs of the first port (PE1) of ranks b + 1 to at most s-b-2 and the second inputs of the duplexers are respectively linked to the inputs of the second port (PE2) of rank s-b-2 to b+1,
**in that** the selection means select the first b bits of each of the first and second words, the bits delivered by the output of the controlled duplexers (Duv), and at least two other bits (G, H) selected, as a function of a memory configuration state cue (ICP1, ICP2), in the group formed by at least the highest two addressing bits of the first or of the second word, and at least the b^{th} bit (X4) of one of the first and second words, and **in that** the generation means generate the cell address word (MAC) from the first bits (Y1-Y4) of one of the first and second words, the bits (S5-S9) delivered by the controlled duplexers and one at least of the said other two bits (G, H).

25. Device according to one of Claims 16 to 24, **characterized in that** the input means comprise 2^{b} pairs of input ports intended to receive respectively and simultaneously 2^{b} chosen address cues (IAD) corresponding to 2^{b} distinct bank address words (B1-B16) having regard to the predetermined injective conversion law (TIM), in such a way as to be able to access or read a plurality of data simultaneously while avoiding conflicts of access to identical banks.

26. Device according to Claim 25 taken in combination with Claim 22, **characterized in that** the memory (MM) is partitioned into as many independent memory blocks as bits of the first word which are forced to a predetermined value (BF3).
